# EUROPEAN PATENT APPLICATION

(11) **EP 4 586 449 A1**
(43) Date of publication of application: **16.07.2025**
(21) Application number: 23862962.0
(22) Date of filing: 24.08.2023
(51) Int. Cl.: H02J 7/00

(54) **POWER CONVERSION DEVICE AND PROGRAM**

(30) Priority: 09.09.2022 JP 2022144022
(71) Applicant: DENSO CORPORATION, Kariya-city, Aichi 448-8661 (JP)
(72) Inventor: TAKASHIMA, Kaoru, Kariya- city, Aichi 4488661 (JP); KAZAOKA, Ryoya, Kariya- city, Aichi 4488661 (JP); TOYAMA, Keisuke, Kariya- city, Aichi 4488661 (JP); KURACHI, Taisuke, Kariya- city, Aichi 4488661 (JP); KAGAMI, Yoshihiro, Kariya- city, Aichi 4488661 (JP); KUBO, Shunichi, Kariya- city, Aichi 4488661 (JP)
(74) Representative: TBK
(86) International application number: PCT/JP2023/030615
(87) International publication number: WO 2024/053423

(57) **Abstract**

An electrical power converter includes an inverter (20), a motor (10) equipped with armature windings (11), a battery-to-battery switch (40) disposed in a battery-to-battery electrical path (24) connecting with a negative terminal of a first storage battery (31) and a positive terminal of a second storage battery, a bypass switch (50, 51), a motor electrical path (25 to 28) electrically connecting the armature windings to the battery-to-battery electrical path, and a control device (100). When determining that a power transfer request is made to transfer electrical power between the first storage battery and the second storage battery, the control device sets an operation mode for the battery-to-battery switch and the bypass switch to a first mode or a second mode and performs a switching operation of the inverter to achieve an electrical power transfer task to transfer electrical power between the first and second storage batteries. The first mode is a mode in which the battery-to-battery switch is turned on, while the bypass switch is turned off. The second mode is a mode in which the battery-to-battery switch is turned off, while the bypass switch is turned on.

## Description

### CROSS REFERENCE TO RELATED DOCUMENT

The present application claims the benefit of priority of Japanese Patent Application No. 2022-144022 filed on September 9, 2022, the disclosure of which is incorporated in its entirety herein by reference.

### Technical Field

This disclosure relates generally to an electrical power converter and a program.

### BACKGROUND ART

Japanese Patent No. 6930306 teaches an in-vehicle system which includes an electrical motor, a first storage battery, and a second storage battery. The first and second storage batteries are electrically connected to armature windings of the motor. The system also includes a relay which changes a connection of the first and second storage batteries to a series-connection or a parallel-connection. This enables the first and second storage batteries to be electrically charged using a first external charger producing a charging voltage of 400V or a second external charger producing a charging voltage of 800V. In use of the first external charger whose charging voltage is 400V, the first and second storage batteries are placed in the form of the parallel-connection. The charging of the first and second storage batteries is, therefore, achieved by reducing a system voltage.

### PRIOR ART DOCUMENT

### PATENT LITERATURE

FIRST PATENT LITERATURE : Japanese Patent No. 6930306

### SUMMARY OF THE INVENTION

New electrical power converter are sought which are capable of transmitting electrical energy between a first storage battery and a second storage battery.

It is an object of this disclosure to provide an electrical power converter capable of transferring electrical power between a first storage battery and a second storage battery and a program used to achieve such power transfer.

According to this disclosure, there is provided an electrical power converter which comprises: (a) a high-potential electrical path which is electrically connectable with a positive terminal of a first storage battery; (b) a low-potential electrical path which is electrically connectable with a negative terminal of a second storage battery; (c) an inverter which includes upper arm switches and lower arm switches, the upper arm switches being electrically connected with the high-potential electrical path, the lower arm switches being electrically connected to the low-potential electrical path; (d) a motor which includes armature windings electrically connected to joints of the upper arm switches and the lower arm switches through conductors; (e) a battery-to-battery switch which is disposed on a battery-to-battery electrical path electrically connecting with a negative terminal of the first storage battery and a positive terminal of the second storage battery; (f) a bypass switch which establishes at least one of an electrical connection between the negative terminals of the first storage battery and second storage battery and an electrical connection between the positive terminals of the first storage battery and the second storage battery; (g) a motor electrical path which electrically connects the armature windings or the conductors with the battery-to-battery electrical path; and (h) a control device which determines whether there is a power transfer request which requests transfer of electrical power between the first storage battery and the second storage battery. When determining that there is a power transfer request, the control device sets an operation mode for the battery-to-battery switch and the bypass switch to a first mode or a second mode and then controls a switching operation of the inverter to perform an electrical power transfer task to transmit electrical power between the first storage battery and the second storage battery. The first mode is a mode in which the battery-to-battery switch is turned on, and the bypass switch is turned off. The second mode is a mode in which the battery-to-battery switch is turned off, and the bypass switch is turned on.

An electrical circuitry which establishes transfer of electrical power from the first storage battery to the second storage battery or vice versa through the inverter and the armature windings is created by setting the operation mode for the battery-to-battery switch and the bypass switch to a selected one of the first mode and the second mode. Specifically, the transfer of electrical power between the first storage battery and the second storage battery is achieved by controlling the switching operation of the inverter in one of the first and second modes. The structures of the motor and the inverter are used in the power transfer, thereby enabling the structure of the electrical power converter to be simplified without sacrificing efficiency of power transfer.

### BRIEF DESCRIPTION OF THE DRAWINGS

The above-described object, other objects, features, or beneficial advantages in this disclosure will be apparent from the following detailed discussion with reference to the drawings.

In the drawings:
Fig. 1 is a view which illustrates an overall structure of a system according to the first embodiment;
Fig. 2 is a flowchart of a sequence of steps of an electrical power transfer control task;
Fig. 3 is a view which demonstrates conditions for a power transfer request;
Fig. 4 is a view which illustrates a switching operation in a high-voltage charging mode;
Fig. 5 is a view which illustrates a switching operation in a high-voltage charging mode;
Fig. 6 is a view which illustrates an equivalent circuit in a high-voltage charging mode;
Fig. 7 is a view which illustrates a switching operation in a low-voltage charging mode;
Fig. 8 is a view which illustrates a switching operation in a low-voltage charging mode;
Fig. 9 is a view which illustrates an equivalent circuit in a low-voltage charging mode;
Fig. 10 is a view which illustrates an overall structure of a system according to the second embodiment;
Fig. 11 is a view which illustrates an overall structure of a system according to a first modified form of the second embodiment;
Fig. 12 is a view which illustrates an overall structure of a system according to a second modified form of the second embodiment;
Fig. 13 is a view which illustrates an overall structure of a system according to a third modified form of the second embodiment;
Fig. 14 is a view which illustrates an overall structure of a system according to the third embodiment;
Fig. 15 is a time chart which demonstrates a malfunction diagnosis of switches;
Fig. 16 is a time chart which demonstrates a malfunction diagnosis of switches;
Fig. 17 is a time chart which demonstrates a malfunction diagnosis of switches;
Fig. 18 is a view which illustrates an overall structure of a system according to a modified form of the third embodiment;
Fig. 19 is a view which demonstrates a switching operation to pre-charge a first storage battery;
Fig. 20 is a view which demonstrates a switching operation to pre-charge a second storage battery;
Fig. 21 is a view which illustrates an overall structure of a system according to a modified form of the third embodiment;
Fig. 22 is a view which demonstrates a switching operation to pre-charge a first storage battery;
Fig. 23 is a view which illustrates an overall structure of a system according to the fourth embodiment;
Fig. 24 is a view which illustrates an overall structure of a system according to the fifth embodiment;
Fig. 25 is a view which demonstrates a switching operation in a high-voltage charging mode;
Fig. 26 is a view which demonstrates a switching operation in a low-voltage charging mode;
Fig. 27 is a view which illustrates an overall structure of a system according to the sixth embodiment;
Fig. 28 is a view which illustrates an overall structure of a system according to the seventh embodiment;
Fig. 29 is a view which illustrates an overall structure of a system according to another embodiment;
Fig. 30 is a view which illustrates an overall structure of a system according to another embodiment;
Fig. 31 is a view which illustrates an overall structure of a system according to another embodiment;
Fig. 32 is a view which demonstrates a switching operation in a low-voltage charging mode;
Fig. 33 is a view which illustrates an overall structure of a system according to another embodiment;
Fig. 34 is a view which illustrates an overall structure of a system according to another embodiment; and
Fig. 35 is a flowchart of a sequence of steps of an electrical power transfer control task according to another embodiment.

### MODE FOR CARRYING OUT THE INVENTION

Embodiments will be described below with reference to the drawings. Parts of the embodiments functionally or structurally corresponding to each other or associated with each other will be denoted by the same reference numbers or by reference numbers which are different in the hundreds place from each other. The corresponding or associated parts may refer to the explanation in the other embodiments.

### FIRST EMBODIMENT

An electrical power converter according to the first embodiment will be described below with reference to the drawings. The electrical power converter is mounted in a vehicle, such as an electrical vehicle or a hybrid vehicle, and works as an in-vehicle system.

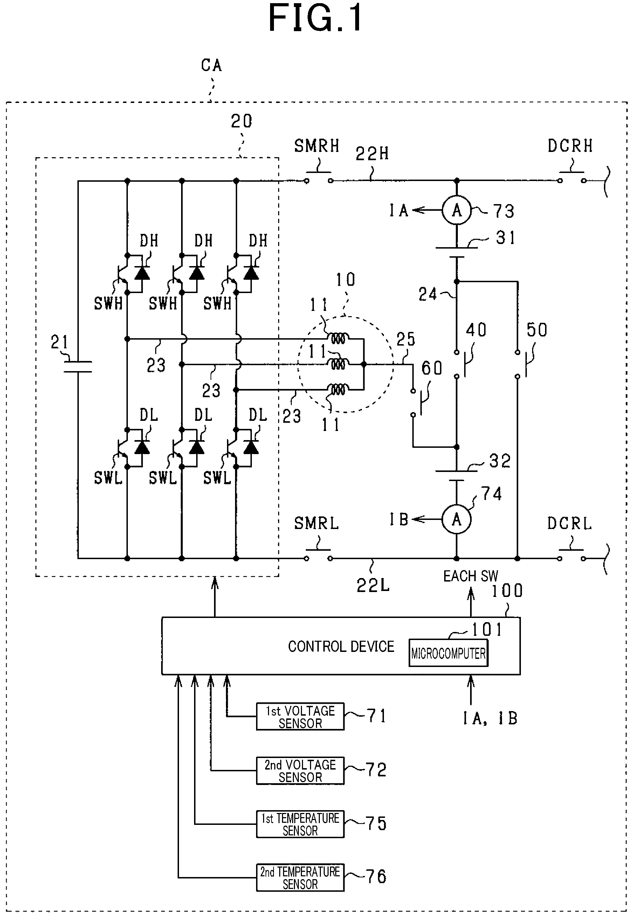

A system installed in the vehicle CA is equipped with an electrical power converter. The electrical power converter, as illustrated in Fig. 1, includes the motor 10, the inverter 20, the high-potential electrical path 22H, and the low-potential electrical path 22L. The motor 10 is designed as a three-phase synchronous machine which includes a rotor (not shown) and a U-phase, a V-phase, and a W-phase armature windings 11 which are star-connected together. The U-phase, V-phase, and W-phase armature windings 11 are shifted or offset by an electrical angle of 120° from each other. The motor 10 is implemented by, for example, a permanent magnet synchronous machine. The rotor of the motor 10 is capable of transmitting power to drive wheels of the vehicle CA. In other words, the motor 10 works as a torque source to move the vehicle CA.

The inverter 20 includes series-connected units of upper arm switches *SWH* and lower arm switches *SWL* for three phases. The upper arm diodes *DH* that are freewheel diodes are connected in reverse parallel to the upper arm switches *SWH.* Similarly, the lower arm diodes DL that are freewheel diodes are connected in reverse parallel to the lower arm switches *SWL.* In this embodiment, each of the switches *SWH* and *SWL* is implemented by an IGBT.

The inverter 20 includes the smoothing capacitor 21. The smoothing capacitor 21 has a high-potential terminal connecting with a first end of the elongated high-potential electrical path 22H. The smoothing capacitor 21 also has a low-potential terminal connecting with a first end of the elongated low-potential electrical path 22L. The smoothing capacitor 21 may be disposed outside the inverter 20.

Each of the U-phase, V-phase, and W-phase upper arm switches *SWH* has a low-potential terminal (i.e., an emitter). Each of the U-phase, V-phase, and W-phase lower arm switches *SWL* has a high-potential terminal (i.e., a collector). The high-potential terminal of each of the U-phase, V-phase, and W-phase upper arm switches *SWH* connects with the low-potential terminal of a corresponding one of the U-phase, V-phase, and W-phase lower arm switches *SWL.* The joint of the high-potential terminal of each of the U-phase, V-phase, and W-phase upper arm switches *SWH* and the low-potential terminal of a corresponding one of the U-phase, V-phase, and W-phase lower arm switches *SWL* is connected to a first end of a corresponding one of the U-phase, V-phase, and W-phase armature windings 11 using one of the conductors 23, such as busbars. The armature windings 11 have second ends connected together at a neutral point. In this embodiment, the U-phase, V-phase, and W-phase armature windings 11 are identical in number of turns with each other, so that inductances thereof are identical with each other.

The collector of each of the U-phase, V-phase, and W-phase upper arm switches *SWH* connects with the high-potential electrical path 22H. The emitter of each of the U-phase, V-phase, and W-phase lower arm switches *SWL* connects with the low-potential electrical path 22L.

The system also includes the first storage battery 31 and the second storage battery 32. Each of the first and second storage batteries 31 and 32 works as a power supply to drive the rotor of the motor 10. Each of the first and second storage batteries 31 and 32 is implemented by an assembled battery made of electrical cells connected in series with each other. The first storage battery 31 has a positive terminal leading to the high-potential electrical path 22H. The second storage battery 32 has a negative terminal leading to the low-potential electrical path 22L. The electrical cells of each assembled battery are identical in terminal-to-terminal voltage (e.g., a voltage rating) with each other. The electrical cells are made of secondary batteries, such as lithium-ion batteries.

Each of the first and second batteries 31 and 32 is rechargeable by an external charger, which will be described later in detail, arranged outside the vehicle CA. The external charger is implemented by, for example, a stationary charger. The high-potential electrical path 22H has a second end which is located on an opposite side of a joint to the smoothing capacitor 21 and has mounted thereon a positive terminal connector to which a positive terminal of the external charger is connectable. The low-potential electrical path 22L has a second end which is located on an opposite side of a joint to the smoothing capacitor 21 and has mounted thereon a negative terminal connector to which a negative terminal of the external charger is connectable.

The electrical power converter includes main switches each of which works to electrically connect or disconnect between a corresponding one of the first and second batteries 31 and 32 and the inverter 20. Specifically, the main switches include the high-potential main switch *SMRH* and the low-potential main switch *SMRL.* The electrical power converter also includes electrical charging switches each of which works to electrically connect or disconnect between a corresponding one of the first and second batteries 31 and 32 and the external charger. Specifically, the electrical charging switches include the high-potential charging switch *DCRH* and the low-potential charging switch *DCRL.* In this embodiment, each of the switches *SMRH, SMRL, DCRH,* and *DCRL* is made of a mechanical relay. Each of the switches SMRH, SMRL, DCRH, and DCRL works to block a flow of electrical current in both directions when turned off, while it works to allow the flow of electrical current in both directions when turned on. The high-potential electrical path 22H has mounted therein the high-potential main switch *SMRH* and the high-potential charging switch *DCRH* which are located away from the inverter 20 in this order. The low-potential electrical path 22L has mounted therein the low-potential main switch *SMRL* and the low-potential charging switch *DCRL* which are located away from the inverter 20 in this order. Each of the high-potential main switch *SMRH,* the low-potential main switch *SMRL,* the high-potential charging switch *DCRH,* and the low-potential charging switch *DCRL* may be made of a mechanical relay or a semiconductor switching device.

The electrical power converter also includes the battery-to-battery switch 40, the inter-negative terminal bypass switch 50, and the motor switch 60 for use in switching between connection modes to connect the first storage battery 31 or the second storage battery 32 with the external charger. Each of the battery-to-battery switch 40, the inter-negative terminal bypass switch 50, and the motor switch 60 is made of a mechanical relay. Each of the battery-to-battery switch 40, the inter-negative terminal bypass switch 50, and the motor switch 60 works to block a flow of electrical current in both directions when turned off, while it works to permit a flow of electrical current in both directions when turned on. Each of the battery-to-battery switch 40, the inter-negative terminal bypass switch 50, and the motor switch 60 may alternatively be made of a semiconductor switching device.

The battery-to-battery switch 40 is disposed in the battery-to-battery electrical path 24 connecting between the negative terminal of the first storage battery 31 and the positive terminal of the second storage battery 32. When the battery-to-battery switch 40 is turned on, it electrically connects the negative terminal of the first storage battery 31 and the positive terminal of the second storage battery 32 together. Alternatively, when the battery-to-battery switch 40 is turned off, it electrically disconnects between the negative terminal of the first storage battery 31 and the positive terminal of the second storage battery 32.

The inter-negative terminal bypass switch 50 works to connect the negative terminal of the first storage battery 31 and the low-potential electrical path 22L together. Specifically, when the inter-negative terminal bypass switch 50 is turned on, it electrically connects the negative terminal of the first storage battery 31 and the negative terminal of the second storage battery 32. Alternatively, when the inter-negative terminal bypass switch 50 is turned off, it electrically disconnects the negative terminal of the first storage battery 31 and the negative terminal of the second storage battery 32 from each other.

The motor switch 60 is installed in the motor electrical path 25 which connects the neutral point of the armature windings 11 with a portion of the battery-to-battery electrical path 24 which is located between the second storage battery 32 and the battery-to-battery switch 40 (e.g., closer to the second storage battery 32 than the battery-to-battery switch 40 is). When the motor switch 60 is turned on, it electrically connects the neutral point of the armature windings 11 and the positive terminal of the second storage battery 32. Alternatively, when the motor switch 60 is turned off, it electrically disconnects between the neutral point of the armature windings 11 and the positive termina of the second storage battery 32.

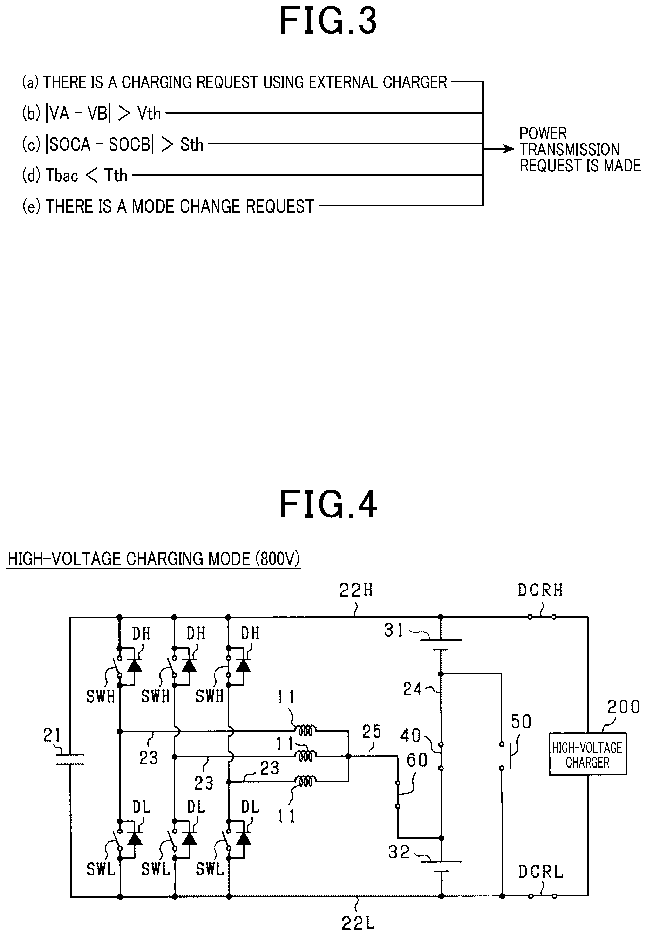

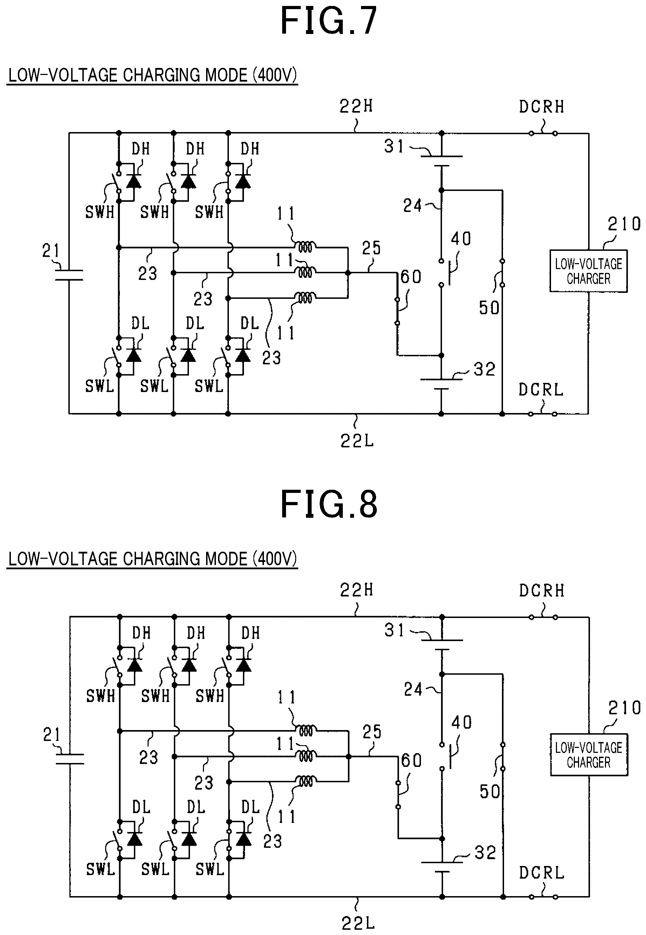

The battery-to-battery switch 40, the inter-negative terminal bypass switch 50, and the motor switch 60 are actuated in a selected one of given operation modes which include a serial neutral point mode (which will also be referred to below as a first operation mode or simply a first mode) and a motor-through parallel mode (which will also be referred to below as a second operation mode or second mode). The serial neutral point mode is to turn on the battery-to-battery switch 40 and the motor switch 60 and turn off the inter-negative terminal bypass switch 50 (see Fig. 4). For instance, the serial neutral point mode is used for the high-voltage charger 200 to electrically charge the first and second storage batteries 31 and 32. The motor-through parallel mode is to turn off the battery-to-battery switch 40 and turn off the inter-negative terminal bypass switch 50 and the motor switch 60 (see Fig. 7). For instance, the motor-through parallel mode is used for the low-voltage charger 210 to electrically charge the first storage battery 31.

The electrical power converter also includes the first voltage sensor 71 and the second voltage sensor 72. The first voltage sensor 71 works to measure a terminal-to-terminal voltage developed at the first storage battery 31. The second voltage sensor 72 works to measure a terminal-to-terminal voltage developed at the second storage battery 32. The electrical power converter also includes the first current sensor 73 and the second current sensor 74. The first current sensor 73 works to measure an electrical current flowing in the first storage battery 31. The second current sensor 74 works to measure an electrical current following in the second storage battery 32. The first current sensor 73 is mounted in an electrical path connecting between the positive terminal of the first storage battery 31 and the high-potential electrical path 22H. The second current sensor 74 is mounted in an electrical path connecting between the negative terminal of the second storage battery 32 and the low-potential electrical path 22L. The electrical power converter also includes the first temperature sensor 75 and the second temperature sensor 76. The first temperature sensor 75 works to measure the temperature at the first storage battery 31. The second temperature sensor 76 works to measure the temperature at the second storage battery 32. The electrical power converter also includes an angle sensor working to measure an angular position (i.e., electrical angle) of the rotor and a phase current sensor working to measure a phase current that is an electrical current flowing in each of the armature windings 11.

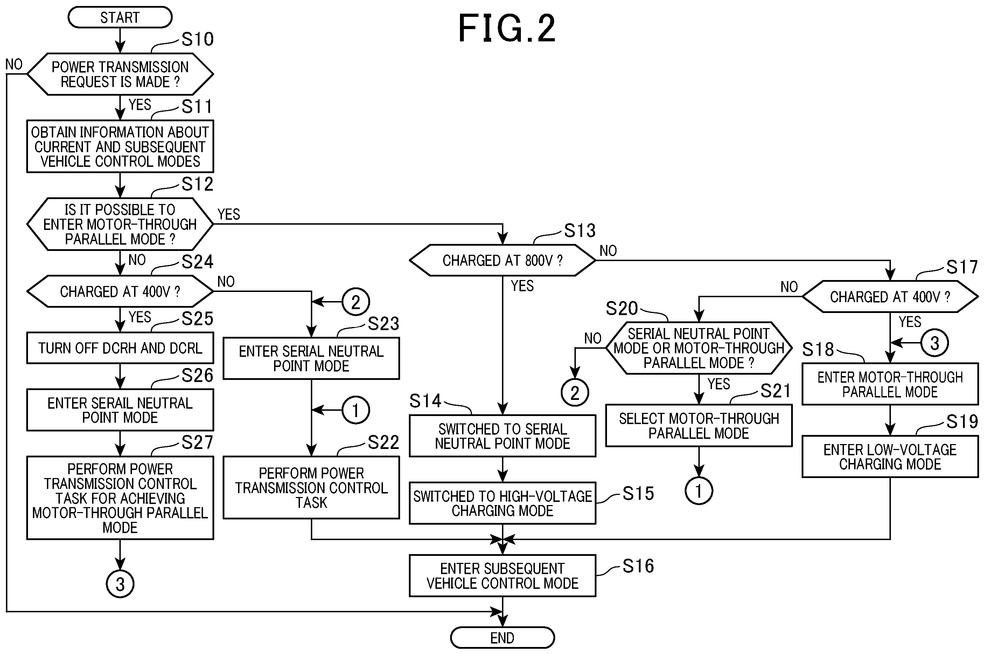

Outputs of all the sensors are inputted into the control device 100 (which will also be referred to below as a controller) installed in the electrical power converter. The control device 100 is mainly made of the microcomputer 101. The microcomputer 101 includes a CPU. Functions performed by the microcomputer 101 may be achieved by a combination of software stored in a tangible memory and a computer executing the software, only software, only hardware, or a combination thereof. For instance, in a case where the microcomputer 101 is made of an electronic circuit (i.e., hardware), the electronic circuit may include a digital circuit or an analog circuit which consists of a plurality of logic circuits. For instance, the microcomputer 101 works to execute programs stored in a non-transitory tangible storage medium installed therein in the form of a storage memory. The programs include a program which will be described later with reference to Fig. 2. The program is executed to perform predetermined tasks. The storage memory may be implemented by a non-volatile memory. The programs retained in the storage memory may be updated using an over-the-air or a communication network, such as the internet.

The control device 100 analyzes the outputs from the sensors to control switching operations of the switches *SWH* and *SWL* of the inverter 20 in order to bring a controlled parameter (e.g., a degree of output torque) of the motor 10 into agreement with a target value in a feedback mode. The upper arm switches *SWH* and the lower arm switches *SWL* are alternately turned on for each phase. In the feedback mode, torque produced by the rotor of the motor 10 is transmitted to the drive wheels of the vehicle CA to propel the vehicle *CA.*

Each of the positive terminal connector of the high-potential electrical path 22H and the negative terminal connector of the low-potential electrical path 22L functions as an interface for connection with the external charger. In this embodiment, the external charger includes the high-voltage charger 200 or the low-voltage charger 210 (see Figs. 4 and 7). The high-voltage charger 200 generates a charging voltage, e.g., 800V which is substantially equal to a terminal-to-terminal voltage (i.e., a voltage rating) developed at a series-connected unit of the first and second storage batteries 31 and 32. The low-voltage charger 210 generates a charging voltage, e.g., 400V which is lower than the voltage rating developed at the series-connected unit of the first and second storage batteries 31 and 32. When a user or an operator connects the external charger with the positive and negative terminal connectors to electrically charge the first and second storage batteries 31 and 32, the control device 100 turns on the high-potential charging switch *DCRH* and the low-potential charging switch *DCRL.*

Alternatively, when the first and second storage batteries 31 and 32 are not required to be electrically charged by the external charger or disconnected from the external charger, the control device 100 keeps the high-potential charging switch *DCRH* and the low-potential charging switch *DCRL* turned off. This is because in a case where the positive terminal connector and the negative terminal connector are exposed outside the housing of the electrical power converter, there is a risk that they may be touched by a user or an operator. The control device 100 turns off the high-potential charging switch DCRH and the low-potential charging switch DCRL to prevent the user or operator from being electrically shocked.

An electrical power transfer control task which controls transfer of electrical power between the first and second storage batteries 31 and 32 and includes a charging task for the external charger will be described below with reference to Fig. 2. The electrical power transfer control task is performed by the control device 100. In this embodiment, the program in Fig. 2 is executed when the vehicle CA is stopped or parked.

First, in step S10, it is determined whether there is a power transfer request. Specifically, when one of the conditions (a) to (e) demonstrated in Fig. 3 is met, it is determined that there is the power transfer request.

(a) The condition where a charging request is made by the external charger.

If the charging request is determined to have been made by the external charger, it is also determined which of the high-voltage charger 200 and the low-voltage charger 210 should be used as the external charger to electrically charge the first and second storage batteries 31 and 32.

(b) The condition where an absolute value of a difference between a terminal-to-terminal voltage at the first storage battery 31 measured by the first voltage sensor 71 (which will also be referred to as a first measured voltage VA) and a terminal-to-terminal voltage at the second storage battery 32 measured by the second voltage sensor 72 (which will also be referred to as a second measured voltage *VB*) is higher than a voltage threshold value *Vth.*

If the above condition (b) is met, it is determined that an equalizing request is made to equalize the terminal-to-terminal voltages at the first and second storage batteries 31 and 32 (i.e., voltage developed between the terminals of the first storage battery 31 and voltage developed between the terminals of the second storage battery 32). A power transfer task is then performed in step S22, which will be described later in detail, to transmit electrical power between the first storage battery 31 and the second storage battery 32 to decrease a difference in terminal-to-terminal voltage between the first storage battery 31 and the second storage battery 32.
(c) The condition where an absolute value of a difference between the state of charge *SOCA* of the first storage battery 31 and the state of charge *SOCB* of the second storage battery 32 is higher than a charging threshold value *Sth.*

If the condition (c) is met meaning that there is the averaging request to equalize the states of charge of the first and second storage batteries 31 and 32, the power transfer task is performed in step S22 to transmit electrical power between the first storage battery 31 and the second storage battery 32 to decrease the difference in state of charge between the first storage battery 31 and the second storage battery 32. The first state of charge *SOCA* is determined using parameters measured by the first voltage sensor 71 and the first current sensor 73. Similarly, the second state of charge *SOCB* is determined using parameters measured by the second voltage sensor 72 and the second current sensor 74.

(d) The condition where a battery temperature *Tbat* is less than a target temperature *Tth* (i.e., a temperature threshold).

If the condition (d) is met meaning that there is a temperature-raising request to elevate the temperature of the first and second storage batteries 31 and 32, a temperature-raising task is performed in step S22 to increase the temperature of the first and second storage batteries 31 and 32 in order to ensure required performance of the first and second storage batteries 31 and 32. The battery temperature *Tbat* may be given by the temperature of the first storage battery 31 (which will also be referred to below as a first measured temperature TA) measured by the first temperature sensor 75 or the temperature of the second storage battery 32 (which will also be referred to below as a second measured temperature *TB*) measured by the second temperature sensor 76, whichever is lower.

(e) The condition in which there is a request to change a vehicle control mode.

The vehicle control mode is, for example, a parking mode or a travel standby mode in which the battery-to-battery switch 40 is turned on for moving or driving the vehicle CA. For instance, when the current vehicle control mode is set to the parking mode, and the travel standby mode is selected as the subsequent vehicle control mode, it may be required to control the states of charge of or voltages developed at the first and second storage batteries 31 and 32 before the travel standby mode is entered. The condition (e) is provided for such an occasion.

Referring back to Fig. 2, if it determined in step S10 that there is the power transfer request, then the routine proceeds to step S11 wherein information about the current vehicle control mode and information about the subsequent vehicle control mode scheduled to be entered after completion of the electrical power transfer control task are obtained.

The routine proceeds to step S12 wherein it is determined whether it is possible to change the operation mode for the battery-to-battery switch 40, the inter-negative terminal bypass switch 50, and the motor switch 60 to the motor-through parallel mode. Specifically, when a value, as derived by subtracting the first measured voltage VA from the second measured voltage *VB*, is determined to be lower than or equal to a reference threshold *ΔVjde* (>0), it is determined that it is possible to enter the motor-through parallel mode.

When the terminal-to-terminal voltage at the second storage battery 32 is much higher than that at the first storage battery 31, switching the operation mode for the battery-to-battery switch 40, the inter-negative terminal bypass switch 50, and the motor switch 60 to the motor-through parallel mode will result in flow of electrical current from the second storage battery 32 to the first storage battery 31 through the motor electrical path 25, the armature windings 11, the upper arm didoes *DH* connected in inverse-parallel to the upper arm switches SWH, and the high-potential electrical path 22H (see Fig. 7). This decreases the reliability of operation of the electrical power converter or the batteries 31 and 32.

The task in step S12 is, therefore, performed in order to eliminate the risk of flow of current from the second storage battery 32 to the first storage battery 31 through the motor 10 and the inverter 20 or decrease the amount of current to the first storage battery 31 if the above risk occurs.

The reference threshold *ΔVjde* may be given as a difference in voltage between the first storage battery 31 and the second storage battery 32 which will cause a maximum value or a steady-state value of inrush current generated when the operation mode is changed to the motor-through parallel mode to be lower than a permissible value. The maximum value or the steady-state value of inrush current is usually given as a function of a relation between an impedance of an electrical path extending between the first storage battery 31 and the second storage battery 32 (i.e., impedances of the first and second storage batteries 31 and 32, impedances of the inverter 20 and the armature windings 11, and an impedance of the inverter 20 in the forward direction) and a difference in voltage between the first storage battery 31 and the second storage battery 32. The above-described permissible value may be set to a maximum current which component parts installed in the electrical path are capable of resisting safely.

The reference threshold *ΔVjde* is also determined as being lower than the voltage rating of each of the first and second storage batteries 31 and 32. For instance, the reference threshold *ΔVjde* may be set to be one-tenth, one-twentieth, one-fiftieth, or one-hundredth of a voltage rating of the first storage battery 31 or that of the second storage battery 32, whichever is lower. The condition where the second measured voltage *VB* and the first measured voltage VA are greatly different from each other is usually encountered when one of the following conditions (1) to (3) is met.

(1) The condition where voltage ratings of the first and second storage batteries 31 and 32 are equal to each other, and the number of electrical cells of the first storage battery 31 is different from that of the second storage battery 32.
(2) The condition where the numbers of electrical cells of the first and second storage batteries 31 and 32 are identical with each other, but the first and second storage batteries 31 and 32 are different in type and voltage rating from each other.
(3) The condition where the numbers of electrical cells of the first and second storage batteries 31 and 32 are different from each other, and the first and second storage batteries 31 and 32 are different in type and voltage rating from each other.

If a YES answer is obtained in step S12 meaning that it is possible to enter the motor-through parallel mode, the operation mode for the battery-to-battery switch 40, the inter-negative terminal bypass switch 50, and the motor switch 60 is permitted to be switched to the motor-through parallel mode. The routine then proceeds to step S13 wherein it is determined whether the external charger connecting with the connectors of the electrical paths 22H and 22L is the high-voltage charger 200. If the condition (a) is met in step S10, and the external charger is determined to be the high-voltage charger 200, a YES answer is obtained in step S13.

If it is determined in step S13 that the external charger is the high-voltage charger 200, then the routine proceeds to step S14 wherein the operation mode is, as demonstrated in Fig. 4, switched to the serial neutral point mode in which the battery-to-battery switch 40 and the motor switch 60 are both turned on, while the inter-negative terminal bypass switch 50 is turned off.

The routine proceeds to step S15 wherein the high-potential main switch *SMRH,* the low-potential main switch *SMRL,* and the charging switches *DCRH* and *DCRL* are kept on, and a high-voltage charging mode is entered in which the first storage battery 31 and the second storage battery 32 are electrically charged by the high-voltage charger 200 using outputs from the first and second current sensors 73 and 74 and the first and second voltage sensors 71 and 72. In the high-voltage charging mode, electrical current, as illustrated in Fig. 4, flows through a closed circuit including the high-voltage charger 200, the high-potential electrical path 22H, the first storage battery 31, the battery-to-battery switch 40, the second storage battery 32, and the low-potential electrical path 22L, thereby charging the first storage battery 31 and the second storage battery 32 which are kept connected in series with each other. For the sake of simplicity, Fig. 4 omits the high-potential main switch *SMRH* and the low-potential main switch *SMRL.*

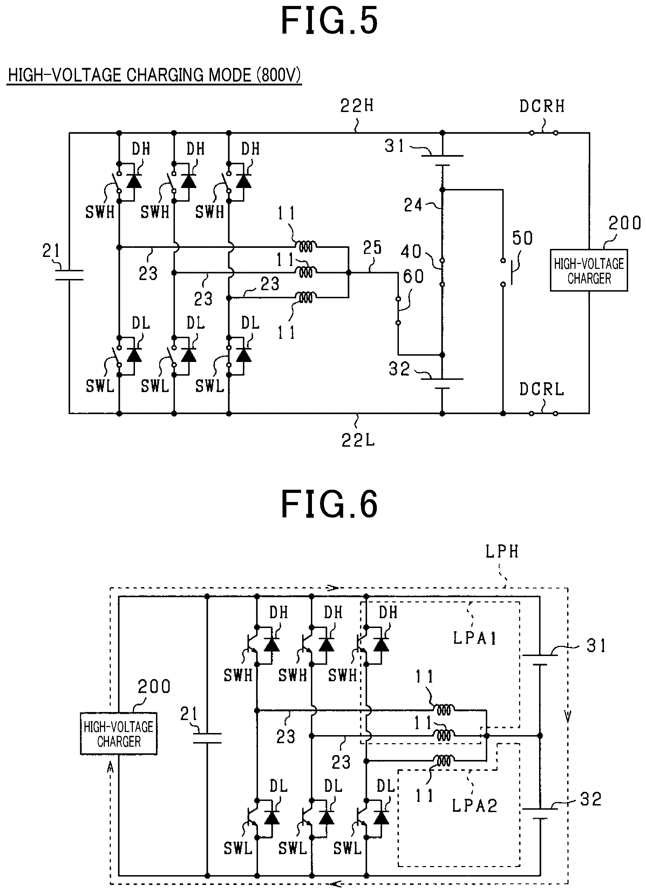

It is possible in the high-voltage charging mode to control degrees of charging power for the first storage battery 31 and the second storage battery 32 independently from each other using parameters measured by the first and second current sensors 73 and 74 and the first and second voltage sensors 71 and 72. Such control may be achieved by performing a switching operation of the inverter 20 for at least one phase while the high-voltage charger 200 is electrically charging the first and second storage batteries 31 and 32. Fig. 4 demonstrates an example of the switching operation of the inverter 20 in which one of the upper arm switches *SWH* for one phase is turned on, while the lower arm switches *SWL* are turned off. Fig. 5 shows the same switching operation as in Fig. 4 in which the upper arm switches *SWH* are turned off, while one of the lower arm switches *SWL* of the same phase as in Fig. 4 is turned on. Specifically, in the switching operation illustrated in Figs. 4 and 5, each of the upper arm switches *SWH* and a corresponding one of the lower arm switches *SWL* are alternately turned on.

In the switching operation of the inverter 20, a current loop *LPA1* or a current loop *LPA2,* as illustrated in Fig. 6, appears which is developed by the switching operations of the upper and lower arm switches *SWH* and *SWL* in addition to a charging-current loop *LPH* in which the charging current developed by the high-voltage charger 200 flows. Such current loops enable charging powers for the first storage battery 31 and the second storage battery 32 to be controlled independently from each other. For instance, the control of the charging powers for the first storage battery 31 and the second storage battery 32 may be achieved by controlling a duty cycle (i.e., *Ton*/*Tsw*) that is a ratio of an on-duration *Ton* of each of the upper arm switches *SWH* or each of the lower arm switches *SWL* to one switching cycle *Tsw.* Such control enables the charging power for one of the first and second storage batteries 31 and 32 to be zero.

For instance, the charging power produced by the high-voltage charger 200 is set to 100kW. The switching operation of the inverter 20 is performed to continue to deliver a power of 10kW from the first storage battery 31 to the second storage battery 32 through the inverter 20 and the armature windings 11. In a case where the first storage battery 31 and the second storage battery 32 are identical in property, SOC, and terminal-to-terminal voltage with each other, the charging power for the first storage battery 31 is set to 40kW, while the charging power for the second storage battery 32 is set to 60kW.

When it is required to increase the degree of charging power for the second storage battery 32 to be greater than that for the first storage battery 31, the switching operation of the inverter 20 is controlled to deliver electrical power from the first storage battery 31 to the second storage battery 32. Specifically, one of the upper arm switches *SWH* and a corresponding one of the lower arm switches *SWL* for at least one phase are alternately turned on, or alternatively, all the lower arm switches *SWL* are kept tuned off for all the phases, while at least one of the upper arm switches *SWH* is turned on or off in a cycle.

When it is required to increase the degree of charging power for the first storage battery 31 to be greater than that for the second storage battery 32, the switching operation of the inverter 20 is controlled to deliver electrical power from the second storage battery 32 to the first storage battery 31. Specifically, one of the upper arm switches *SWH* and a corresponding one of the lower arm switches *SWL* for at least one phase are alternately turned on, or alternatively, all the upper arm switches *SWH* are kept tuned off for all the phases, while at least one of the lower arm switches *SWL* is turned on or off in a cycle.

In the above switching operation to control the charging power for each of the first and second storage batteries 31 and 32, the inverter 20 may be controlled as a function of a measured value of electrical angle of the rotor of the motor 10 to bring the degree of torque outputted by the motor 10, e.g., a q-axis current flowing through the armature windings 11 into agreement with zero or near zero.

The individual control of the charging powers for the first and second storage batteries 31 and 32 is advantageous in a case where the first and second storage batteries 31 and 32 are different in material thereof and charging power (e.g., nominal charging power) from each other.

In the high-voltage charging mode, tasks which will be described below in detail may be performed by a switching operation of the inverter 20 for at least one phase while electrically charging the first storage battery 31 and the second storage battery 32 using the high-voltage charger 200.

One of the tasks is a voltage equalizing task to equalize the first measured voltage VA and the second measured voltage VB. This task may be performed when the conditions (a) and (b) are determined to be met in step S10. Each of the first measured voltage VA and the second measured voltage *VB* will also be referred to below as a capacity parameter.

The voltage equalizing task in step S15 is a task to perform the switching operation of the inverter 20 in the serial neutral point mode until a difference between the first measured voltage VA and the second measured voltage *VB* becomes lower than or equal to the voltage threshold value *Vth.* This enables voltages at the first and second storage batteries 31 and 32 to be equalized while electrically charging the first and second storage batteries 31 and 32 using the high-voltage charger 200.

The second one of the tasks is a capacity equalizing task to equalize the state of charge *SOCA* of the first storage battery 31 and the state of charge *SOCB* of the second storage battery 32. This task may be performed when the conditions (a) and (c) are determined to be met in step S10. Each of the state of charge SOCA and the state of charge SOCB will also be referred to below as a capacity parameter.

The capacity equalizing task in step S15 is a task to perform the switching operation of the inverter 20 in the serial neutral point mode until a difference between the state of charge *SOCA* of the first storage battery 31 and the state of charge *SOCB* of the second storage battery 32 becomes lower than or equal to the charging threshold value *Sth.* This enables the states of charge of the first and second storage batteries 31 and 32 to be equalized while electrically charging the first and second storage batteries 31 and 32 using the high-voltage charger 200.

The capacity equalizing task may alternatively be performed using the capacity [Ah] of each of the first and second storage batteries 31 and 32 which correlates with the state of charge of a corresponding one of the first and second storage batteries 31 and 32.

The third one of the tasks is a temperature raising task to elevate the temperature of the first and second storage batteries 31 and 32. This task may be performed when the conditions (a) and (d) are determined to be met in step S10.

The temperature raising task in step S15 is a task to perform the switching operation of the inverter 20 in the serial neutral point mode to create a flow of discharging or charging ac current between the first storage battery 31 and the second storage battery 32 through the armature windings 11 and the inverter 20 until the battery temperature *Tbat* (i.e., a temperature parameter) reaches the target temperature *Tth.* This switching operation is to alternately turn on or off the upper and lower arm switches *SWH* and *SWL* for at least one phase.

The temperature raising task works to use internal resistances of the first and second storage batteries 31 and 32 to generate heat, thereby raising the temperature of the first and second storage batteries 31 and 32. This enhances the degree of maximum possible charging power for the first and second storage batteries 31 and 32, which results in a decrease in length of time required for electrically charging the first and second storage batteries 31 and 32 using the external charger when the vehicle CA is parked.

The above-described voltage equalizing task may be performed prior to the temperature raising task. Rates at which temperatures of the first and second storage batteries 31 and 32 are elevated may be controlled as equal to each other as possible by starting execution of the temperature raising task with a difference between the first measured voltage VA and the second measured voltage *VB* kept low, e.g., below the voltage threshold value *Vth.*

Specifically, when the temperature raising task is being performed, a degree of discharging power from or a degree of charging power into the first storage battery 31 will be equal to that of charging power into or that of discharging power from the second storage battery 32. For instance, assuming that the temperature raising task is performed when the terminal-to-terminal voltage at the first storage battery 31 is 400V, and the terminal-to-terminal voltage at the second storage battery 32 is 100V, the repetition of charging or discharging of 40,000kW in the above way will cause a charging or discharging current of up to 100A to flow in the first storage battery 31 and a charging or discharging current of up to 400A to flow in the second storage battery 32 on the above-described principle that the degree of charging power and that of discharging power will be equal to each other during the execution of the temperature raising task. Generally, a rate of rise of temperature of a battery depends upon Joule heat generated in the battery. Joule heat is proportional to the square of electrical current in the battery. It will, therefore, cause the rate of rise in temperature of the second storage battery 32 to be much higher than that of the first storage battery 31. In order to alleviate such a problem, prior to execution of the temperature raising task, the voltage equalizing task is performed to bring the amount of discharging current from or charging current into the first storage battery 31 as equal to that of charging into or discharging from the second storage battery 32 as possible.

In execution of the temperature raising task, the temperature of the inverter 20 or the motor 10, or the temperature of cooling water for the inverter 20 or the motor which is measured by a sensor and has a positive correlation with the battery temperature *Tbat* may alternatively be used instead of the battery temperature *Tbat.*

When there is no need to control the charging power for each of the first and second storage batteries 31 and 32 or it is not required to perform the voltage equalizing task in step S15, the motor switch 60 may be turned off. This prevents the charging current produced by the high-voltage charger 200 from flowing into the inverter 20 and the armature windings 11.

Referring back to Fig. 2, after completion of operation in step S15, the routine proceeds to step S16 wherein a subsequent vehicle control mode is entered.

Alternatively, if a NO answer is obtained meaning that the external charger is not provided by the high-voltage charger 200, then the routine proceeds to step S17 wherein the external charger connected to the vehicle CA is provided by the low-voltage charger 210. If the condition (a) is met in step S10, and the external charger is provided by the low-voltage charger 210, a YES answer is obtained in step S17.

If it is determined in step S17 that the external charger is provided by the low-voltage charger 210, then the routine proceeds to step S18 wherein the operation mode is changed to the motor-through parallel mode, as demonstrated in Fig. 7, in which the battery-to-battery switch 40 is turned off, while the inter-negative terminal bypass switch 50 and the motor switch 60 are turned on. This decreases a system voltage down to a level substantially equal to the charging voltage developed by the low-voltage charger 210, thereby eliminating the risk of a ground fault during the charging operation of the low-voltage charger 210.

The routine proceeds to step S19 wherein the low-voltage charging mode is entered in which the low-voltage charger 210 electrically charges the first storage battery 31 with the high-potential main switch *SMRH,* the low-potential main switch *SMRL,* and the charging switches *DCRH* and *DCRL* kept on. In the low-voltage charging mode, electrical current, as demonstrated in Fig. 7, flows through a closed circuit consisting of the low-voltage charger 210, the high-potential electrical path 22H, the first storage battery 31, the inter-negative terminal bypass switch 50, and the low-potential electrical path 22L, thereby electrically charging the first storage battery 31 using the low-voltage charger 210.

The low-voltage charging mode is capable of controlling a degree of charging power for each of the first storage battery 31 and the second storage battery 32 as a function of parameters measured by the first and second current sensors 73 and 74 and the first and second voltage sensors 71 and 72. Such control is achieved by performing a switching operation to cyclically turn on or off at least one of the upper arm switches *SWH* of the inverter 20 with the first storage battery 31 kept charged by the low-voltage charger 210. Fig. 7 demonstrates an example of the switching operation where one of the upper arm switches *SWH* of one of the phases is turned on, while the lower arm switches *SWL* are turned off. Fig. 8 demonstrates the switching operation where one of the lower arm switches *SWL* of a selected one of the phases is turned, while the upper arm switches *SWH* are turned off. This mode is capable of setting the charging power for one of the first and second storage batteries 31 and 32 to zero.

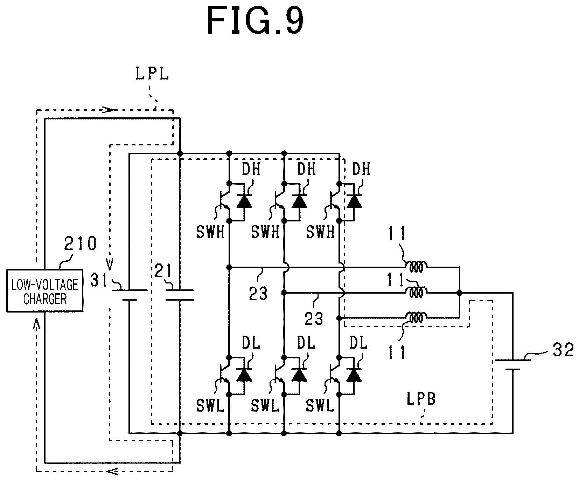

In addition to the current loop *LPL,* as illustrated in Fig. 9, through which electrical current produced by the low-voltage charger 210 flows, the switching operation of the inverter 20 creates a current loop *LPB.* This enables degrees of charging power for the first storage battery 31 and the second storage battery 32 to be controlled independently from each other. Specifically, the degree of charging power for each of the first storage battery 31 and the second storage battery 32 is regulated by controlling a duty cycle (i.e., *Ton*/*Tsw*) that is a ratio of an on-duration of the upper arm switches *SWH* to one switching cycle *Tsw.*

The low-voltage charging mode is also capable of performing the switching operation of the inverter 20 for at least one phase to achieve the voltage equalizing task, the capacity equalizing task, and the temperature raising task while electrically charging the first storage battery 31 using the low-voltage charger 210.

The voltage equalizing task in step S19 is a task which performs the switching operation of the inverter 20 until a difference between the first measured voltage VA and the second measured voltage *VB* decreases to be equal to or less than the voltage threshold value *Vth* in the motor-through parallel mode. Equalization of voltages appearing at the first and second storage batteries 31 and 32 is, therefore, achieved by delivering electrical power from the first storage battery 210 to the second storage battery 32 through the inverter 20 and the armature windings 11 while electrically charging the first storage battery 31 using the low-voltage charger 210.

The capacity equalizing task in step S19 is a task which performs the switching operation of the inverter 20 until a difference between the state of charge *SOCA* of the first storage battery 31 and the state of charge *SOCB* of the second storage battery 32 decreases to be equal to or less than the charging threshold value *Sth* in the motor-through parallel mode. This achieves equalization of the states of charge of the first and second storage batteries 31 and 32 while electrically charging the first storage battery 31 using the low-voltage charger 210.

The temperature raising task in step S19 is a task which performs the switching operation of the inverter 20 to create a flow of charging or discharging ac current between the first storage battery 31 and the second storage battery 32 through the armature windings 11 and the inverter 20 until the battery temperature *Tbat* reaches the target temperature *Tth* in the motor-through parallel mode. The voltage equalizing task may be initiated prior to the temperature raising task.

The low-voltage charging mode is, therefore, capable of electrically charging the first storage battery 31 directly using the low-voltage charger 210 and also electrically charging the second storage battery 32 through the inverter 20 and the armature windings 11. The low-voltage charging mode is also capable of simultaneously charging the first and second storage batteries 31 and 32 without use of an additional power converter even when the first and second storage batteries 31 and 32 are different in voltage rating from each other, or the first and second storage batteries 31 and 32 are identical in voltage raging with each other, but different in terminal-to-terminal voltage from each other.

Referring back to Fig. 2, after completion of the operation in step S19, the routine proceeds to step S16 wherein the vehicle control mode is entered in the next cycle.

Alternatively, if a NO answer is obtained in step S17, then the routine proceeds to step S20. Specifically, if the condition (a) is not met, but at least one of the conditions (b) to (e) is met in step S10, a NO answer is obtained in step S17.

In step S20, it is determined which of the serial neutral point mode and the motor-through parallel mode should be selected and entered to achieve a power transfer control task in step S22. Specifically, it is determined which is smaller, the serial neutral point mode or the motor-through parallel mode which should be selected in the electrical power transfer control task, in total number of times the battery-to-battery switch 40, the inter-negative terminal bypass switch 50, and the motor switch 60 are expected to undergo switching operations from the current cycle of the vehicle control mode to the subsequent cycle of the vehicle control mode through execution of the electrical power transfer control task in step S22.

Specifically, in step S20, the control device 100 calculates a first total number of switching times the battery-to-battery switch 40, the inter-negative terminal bypass switch 50, and the motor switch 60 will or expected to be turned on or off in a period of time from the current cycle of the vehicle control mode to the subsequent cycle of the vehicle control mode through execution of the electrical power transfer control task which selects the serial neutral point mode.

Additionally, in step S20, the control device 100 calculates a second total number of switching times the battery-to-battery switch 40, the inter-negative terminal bypass switch 50, and the motor switch 60 will be or is expected to be turned on or off in a period of time from the current cycle of the vehicle control mode to the subsequent cycle of the vehicle control mode through execution of the electrical power transfer control task which selects the motor-through parallel mode.

When it is determined in step S20 that the first total number of switching times is smaller than the second total number of switching times, the routine proceeds to step S23 in which the serial neutral point mode is selected. Alternatively, when it is determined in step S20 that the second total number of switching times is smaller than the first total number of switching times, the routine proceeds to step S21 in which the motor-through parallel mode is selected.

The operation in step S20 serves to decrease the rate of electrical aging of the battery-to-battery switch 40, the inter-negative terminal bypass switch 50, and the motor switch 60.

In step S20, a total number of times the battery-to-battery switch 40, the inter-negative terminal bypass switch 50, and the motor switch 60 are expected to be turned on or off from the current cycle of the vehicle control mode until the electrical power transfer control task which selects the serial neutral point mode is performed may be calculated and determined as the first total number of switching times. A total number of times the battery-to-battery switch 40, the inter-negative terminal bypass switch 50, and the motor switch 60 are expected to be turned on or off from the current cycle of the vehicle control mode until the electrical power transfer control task which selects the motor-through parallel mode is performed may be calculated and determined as the second total number of switching times.

When the motor-through parallel mode is selected in step S20, the routine proceeds to step S21 wherein the operation mode is set to the motor-through parallel mode to perform the voltage equalizing task, the capacity equalizing task, or the temperature raising task already described in step S22. The routine then proceeds to step S16.

Alternatively, when the serial neutral point mode is selected in step S20, the routine proceeds to step S23 wherein the operation mode is set to the serial neutral point mode. The routine then proceeds to step S22 wherein the voltage equalizing task, the capacity equalizing task, or the temperature raising task is performed. Afterwards, the routine proceeds to step S16.

If it is determined in step S12 that it is impossible to enter the motor-through parallel mode, the control device 100 inhibits the operation mode from being changed or set to the motor-through parallel mode. The routine then proceeds to step S24 wherein it is determined whether the external charger connected to the connectors of the electrical paths 22H and 22L is the low-voltage charger 210. If the condition (a) is not met, but at least one of the conditions (b) to (e) is met in step S10, a NO answer is obtained in step S24. The routine then proceeds to step S23 wherein the operation mode is set to the serial neutral point mode. The routine proceeds to step S22 wherein the voltage equalizing task, the capacity equalizing task, or the temperature raising task is performed.

Alternatively, if a YES answer is obtained in step S24, the operation mode is enabled to be switched to the motor-through parallel mode, and the low-voltage charging mode in step S19 is performed.

Specifically, if a YES answer is obtained in step S24, then the routine proceeds to step S25 wherein the charging switches *DCRH* and *DCRL* are turned off. This electrically disconnects between the electrical power converter and the external charger to ensure the safety of a user or operator of the vehicle CA.

Subsequently, the routine proceeds to step S26 wherein the operation mode is changed to the serial neutral point mode. The routine proceeds to step S27 wherein a switching operation is performed which cyclically turns on or off at least one of the upper arm switches *SWH* which belongs to a first phase that is a selected one of the three phases without simultaneously turning on the upper and lower arm switches *SWH* and *SWL* of the first phase, thereby continuing transmission of electrical power from the first storage battery 31 to the second storage battery 32 until a difference between the first measured voltage VA and the second measured voltage *VB* drops below the voltage threshold value *Vth.* When the difference between the first measured voltage *VA* and the second measured voltage *VB* is determined to have dropped below the voltage threshold value *Vth,* the routine proceeds to step S18 wherein the operation mode is changed to the motor-through parallel mode. The routine proceeds to step S19 wherein the low-voltage charging mode is performed.

The above-described embodiment provides a simplified structure of the electrical power converter which works to electrically charge the first and second storage batteries 31 and 32 in a desired way.

### SECOND EMBODIMENT

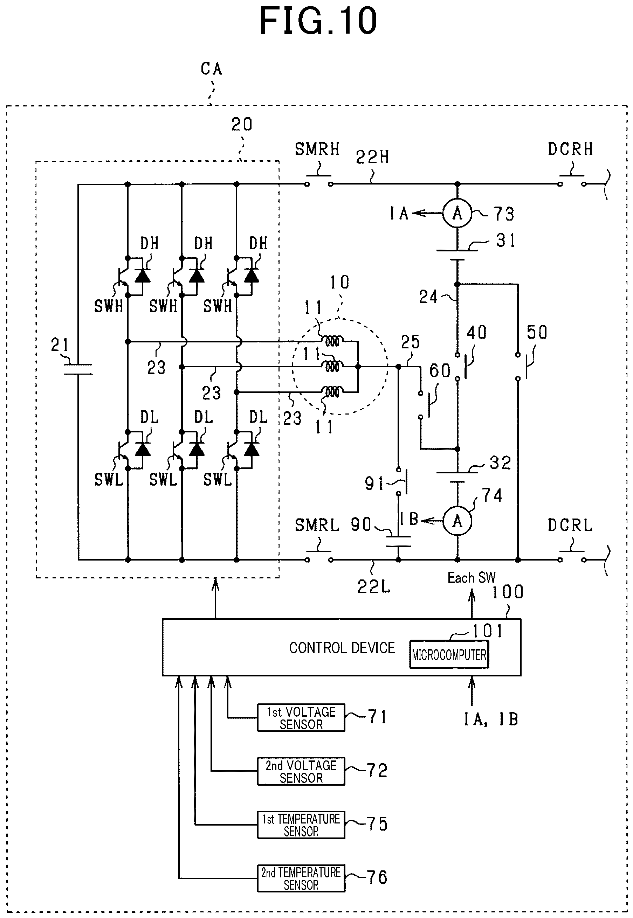

The second embodiment will be described below in terms of differences from the first embodiment with reference to the drawings. This embodiment performs an electrical power transfer control task in which the switching operation of the inverter 20 is controlled. The switching operation usually generates a high-frequency electrical current. The electrical power converter, as illustrated in Fig. 10, includes the capacitor 90 for minimizing a flow of high-frequency electrical current, as arising from the switching operation, from the inverter 20 to the second storage battery 32 and the low-voltage charger 210.

The low-potential electrical path 22L has a portion which lies between the low-potential main switch *SMRL* and the low-potential charging switch *DCRL* and connects through a series-connected combination of the connecting switch 91 and the capacitor 90 with a portion of the motor electrical path 25 arranged closer to the neutral point than the motor switch 60 is. The connecting switch 91 may be made of a mechanical relay or a semiconductor switching device.

The control device 100 turns off the connecting switch 91 during a controlled switching operation of the inverter 20 which moves the vehicle *CA,* thereby minimizing adverse effects on a control operation to bring a controlled parameter of the motor 10 into agreement with a target value.

The control device 100 also works to turn on the connecting switch 91 during execution of the task shown in Fig. 2, thereby causing a noise or ripple contained in an electrical current flowing through the motor electrical path 25 to be inputted into the capacitor 90.

The above-described structure of the second embodiment works to minimize a risk that a high-frequency electrical current, as developed by the switching operation in the electrical power transfer control task, may flow from the inverter 20 into the second storage battery 32 and the low-voltage charger 210.

### MODIFICATIONS OF THE SECOND EMBODIMENT

The capacitor 90 may be arranged closer to the motor electrical path 25 than the connecting switch 91 is. In other words, the connecting switch 91 may be connected directly to the low-potential electrical path 22L without the capacitor 90.

The electrical power converter may not be equipped with the connecting switch 91. In other words, the motor electrical path 25 and the low-potential electrical path 22L are connected together at all the time.

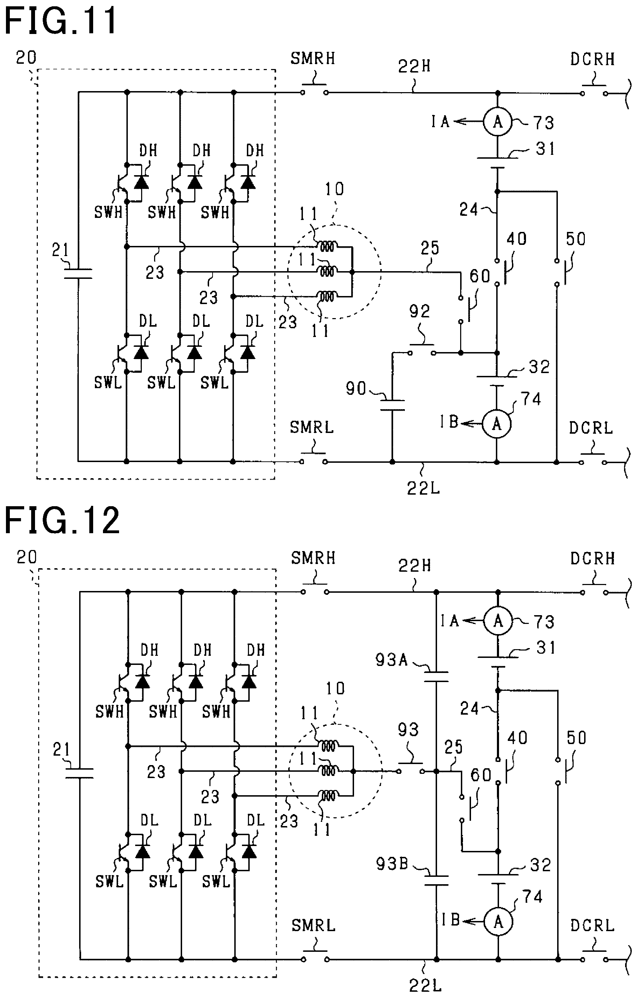

The electrical power converter may be designed, as illustrated in Fig. 11, to have a series-connected combination of the connecting switch 92 and the capacitor 90 which connects a portion of the motor electrical path 25 located closer to the second storage battery 32 than to the motor switch 60 with the low-potential electrical path 22L.

The structure illustrated in Fig. 11 may not include the connecting switch 92. In other words, the motor electrical path 25 may be connected to the low-potential electrical path 22L all the time.

The electrical power converter may be, as illustrated in Fig. 12, designed to have a plurality of capacitors. Specifically, the connecting switch 93 is disposed in a portion of the motor electrical path 25 which is located closer to the neutral point than the motor switch 60 is. The motor electrical path 25 has a portion which is located between the motor switch 60 and the connecting switch 93 and connects with the high-potential electrical path 22H through the first capacitor 93A and also connects with the low-potential electrical path 22L through the second capacitor 93B.

The structure in Fig. 12 may not include one of the first capacitor 93A and the second capacitor 93B.

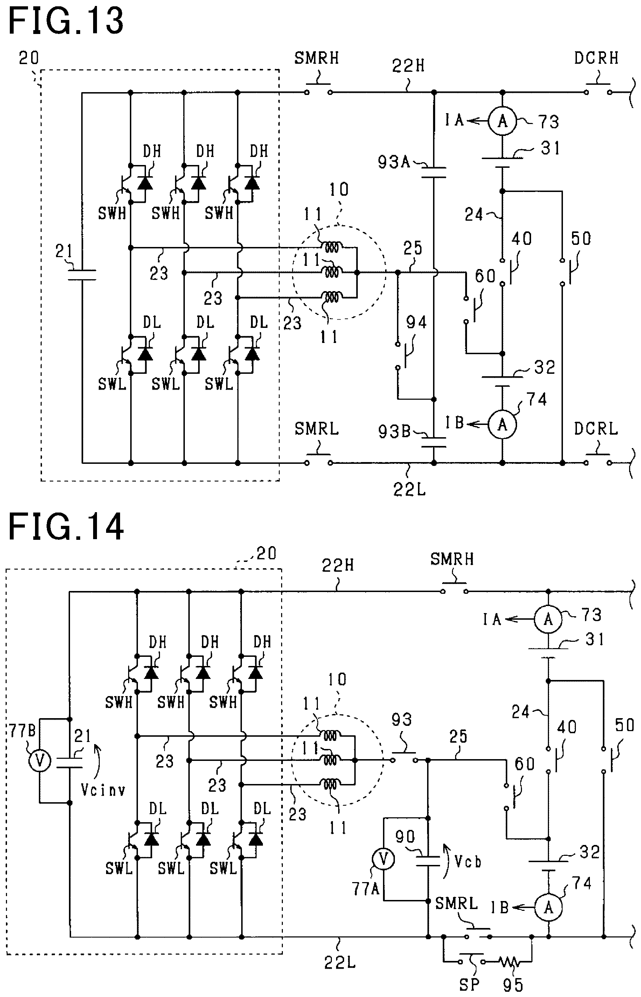

The connecting switch 94 may, as illustrated in Fig. 13, have a first end connecting with a portion of the motor electrical path 25 which is located closer to the neutral point than the motor switch 60 is and also have a second end connecting with the first capacitor 93A and the second capacitor 93B.

### THIRD EMBODIMENT

The third embodiment will be described below in terms of differences from the second embodiment with reference to the drawings. This embodiment, as illustrated in Fig. 14, has a series-connected combination of the precharge switch *SP* and the resistor 95 which is connected in parallel to the low-potential main switch *SMRL.* For the sake of convenience, Fig. 14 omits the control device 100.

The electrical power converter includes the third voltage sensor 77A and the fourth voltage sensor 77B. The third voltage sensor 77A works to measure a terminal-to-terminal voltage at the capacitor 90. The fourth voltage sensor 77B works to measure a terminal-to-terminal voltage at the smoothing capacitor 21. Parameters measured by the third voltage sensor 77A and the fourth voltage sensor 77B are inputted to the control device 100.

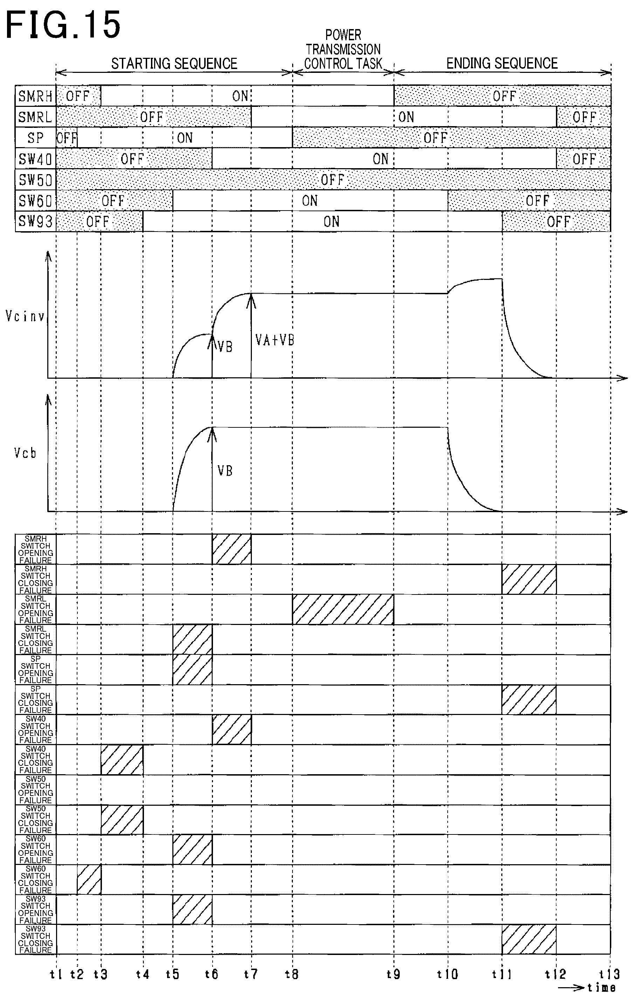

An economic sequence of steps to open or close switches and diagnosis of a malfunction or a defect of each switch (e.g., welding diagnosis) in the serial neutral point mode will be described below with reference to Figs. 15 to 17. In Figs. 15 to 17, *"V_{cinv}"* denotes a terminal-to-terminal voltage at the smoothing capacitor 21 which is measured by the fourth voltage sensor 77B. *"V_{cb}"* denotes a terminal-to-terminal voltage at the capacitor 90 which is measured by the third voltage sensor 77A. Time charts of the voltages *V_{cinv}* and *V_{cb}* in Figs. 15 to 17 represent variations in voltages *V_{cinv}* and *V_{cb}* when each switch is properly operating. Hatched period of times in Figs. 15 to 17 indicate periods of time in which the diagnosis is performed.

In the discussion of a switching task demonstrated in Figs. 15 to 17, an operation to turn on each switch will be referred to below as an on-operation, and a state where each switch is turned on by the on-operation will be referred to as an on-state. An operation to turn off each switch will also be referred to below as an off-operation, and a state where each switch is turned off by the off-operation will also be referred to below as an off-state. When each switch is subjected to the on-operation, but kept off, it means a failure in opening of the switch, which will be referred to below as a switch opening failure, while each switch is subjected to the off-operation, but kept on, it means a failure in closing of the switch, which will be referred to below as a switch closing failure. The switch opening or closing failure may arise from a malfunction in operation of a drive circuit for each switch as well as a malfunction in operation or a defect of the switch itself.

Explanation of Fig. 15 will first be given below.

At time *t1,* the main switches *SWRH* and *SWRL,* the precharge switch *SP,* the battery-to-battery switch 40, the inter-negative terminal bypass switch 50, the motor switch 60, and the connecting switch 93 are turned off.

At time t2, the control device 100 turns on the precharge switch *SP.* The control device 100 determines whether the switch closing failure of the motor switch 60 is occurring using the terminal-to-terminal voltage *V_{cb}* at the capacitor 90 between time *t2* and time *t3.* Specifically, when detecting the fact that the terminal-to-terminal voltage *V_{cb}* developed at the capacitor 90 has not risen, the control device 100 determines that the switch closing failure has not occurred in the motor switch. Alternatively, when detecting the fact that the terminal-to-terminal voltage *V_{cb}* developed at the capacitor 90 is rising, the control device 100 determines that the switch closing failure has occurred in the motor switch 60.

At time *t3,* the control device 100 changes the off-state of the high-potential main switch *SMRH* to the on-state thereof. The control device 100 determines whether the switch closing failure has occurred in each of the battery-to-battery switch 40 and the inter-negative terminal bypass switch 50 using the terminal-to-terminal voltage *V_{cinv}* at the smoothing capacitor 21 between time *t3* and time *t4.* Specifically, when detecting the fact that the terminal-to-terminal voltage *V_{cinv}* at the smoothing capacitor 21 has not risen, the control device 100 determines that the battery-to-battery switch 40 and the inter-negative terminal bypass switch 50 operate properly. Alternatively, when detecting the fact that the terminal-to-terminal voltage *V_{cinv}* at the smoothing capacitor 21 is rising, the control device 100 determines that the switch closing failures of the battery-to-battery switch 40 and the inter-negative terminal bypass switch 50 are occurring.

At time *t4*, the control device 100 turns on the connecting switch 93.

At time *t5,* the control device 100 turns on the motor switch 60. When none of the switches is malfunctioning or has a defect, it will cause terminal-to-terminal voltages developed at the capacitor 90 and the smoothing capacitor 21 to rise to the terminal-to-terminal voltage *VB* at the second storage battery 32.

The control device 100 determines whether the switch opening failure has occurred in the motor switch 60 using the terminal-to-terminal voltage *V_{cb}* at the capacitor 90 between time *t5* and time *t6.* Specifically, when detecting the fact that the terminal-to-terminal voltage *V_{cb}* at the capacitor 90 is rising, the control device 100 determines that the switch opening failure has not occurred in the motor switch 60. Alternatively, when detecting the fact that the terminal-to-terminal voltage *V_{cb}* at the capacitor 90 has not risen, the control device 100 determines that the switch opening failure has occurred in the motor switch 60.

The control device 100 determines whether the switch opening failure has occurred in the connecting switch 93 using the terminal-to-terminal voltage *V_{cinv}* at the smoothing capacitor 21 between time *t5* and time *t6.* Specifically, when detecting the fact that terminal-to-terminal voltage *V_{cinv}* at the smoothing capacitor 21 is rising, the control device 100 determines that the switch opening failure has not occurred in the connecting switch 93. Alternatively, when detecting the fact that terminal-to-terminal voltage *V_{cinv}* at the smoothing capacitor 21 has not risen, the control device 100 determines that the switch opening failure has occurred in the connecting switch 93.

The control device 100 analyzes a reference voltage that is at least one of the terminal-to-terminal voltage *V_{cinv}* at the smoothing capacitor 21 and the terminal-to-terminal voltage *V_{cb}* at the capacitor 90 to determine whether the switch closing failure has occurred in the low-potential main switch *SMRL* between time *t5* and time *t6.* Specifically, when detecting the fact that a rate of rise in the reference voltage are identical with that when the low-potential main switch *SMRL* is in the off-state, the control device 100 determines that the low-potential main switch *SMRL* properly operates. Alternatively, when detecting the fact that the rate of rise in the reference voltage is higher than that when the low-potential main switch *SMRL* is in the off-state, the control device 100 determines that the switch closing failure has occurred din the low-potential main switch *SMRL.*

The control device 100 analyzes the reference voltage that is at least one of the terminal-to-terminal voltage *V_{cinv}* at the smoothing capacitor 21 and the terminal-to-terminal voltage *V_{cb}* at the capacitor 90 to determine whether the switch opening failure has occurred in the precharge switch *SP* between time *t5* and time *t6.* Specifically, when detecting the fact that the reference voltage is increasing, the control device 100 determines that the switch opening failure has not occurred in the precharge switch *SP.* Alternatively, when detecting the fact that the reference voltage is not increasing, the control device 100 determines that the switch opening failure has occurred in the precharge switch *SP.*

At time *t6,* the control device 100 turns on the battery-to-battery switch 40. When none of the switches is malfunctioning or has a defect, it will cause the terminal-to-terminal voltage *V_{cinv}* at the smoothing capacitor 21 to increase up to the sum of terminal-to-terminal voltages at the first and second storage batteries 31 and 32 (i.e., *VA+VB*). This completes the pre-charge.

The control device 100 analyzes the terminal-to-terminal voltage *V_{cinv}* at the smoothing capacitor 21 to determine whether the high-potential main switch *SMRH* and the battery-to-battery switch 40 are subjected to the switch opening failure between time *t6* and time *t7.* Specifically, when detecting the fact that the terminal-to-terminal voltage *V_{cinv}* at the smoothing capacitor 21 has risen, the control device 100 determines that the switch opening failure has not occurred in each of the high-potential main switch *SMRH* and the battery-to-battery switch 40. Alternatively, when detecting the fact that the terminal-to-terminal voltage *V_{cinv}* at the smoothing capacitor 21 has not risen, the control device 100 determines that the switch opening failure has occurred in each of the high-potential main switch *SMRH* and the battery-to-battery switch 40.

At time *t8,* the control device 100 turns on the low-potential main switch *SMRL.*

At time *t9,* the control device 100 turns off the precharge switch *SP* to complete the starting sequence.

The control device 100 performs the task shown in Fig. 2 in a period of time between time *t9* and time *t10.* Between time *t9* and time *t10,* the control device 100 analyzes a parameter outputted from at least one of the current sensors installed in the electrical power converter to determine whether an electrical current properly flows in the electrical power converter, thereby diagnosing whether the switch opening failure has occurred in the low-potential main switch *SMRL.*

At time *t9,* the control device 100 turns off the high-potential main switch *SMRH* to initiate the ending sequence.

At time *t10,* the control device 100 turns off the motor switch 60. The control device 100 cyclically turns on or off at least one of the lower arm switches *SWL* for at least one phase to transfer electrical charges from the capacitor 90 to the smoothing capacitor 21, thereby completing electrical discharge from the capacitor 90.

At time *t11,* the control device 100 turns off the connecting switch 93. The control device 100 controls the switching operations on the upper and lower arm switches *SWH* and *SWL* to emit electrical charges from the smoothing capacitor 21 to complete electrical discharge from the smoothing capacitor 21. At time *t12,* the control device 100 turns off the low-potential main switch *SMRL* and the battery-to-battery switch 40. Subsequently at time *t13,* the control device 100 terminates the ending sequence.

The control device 100 analyzes the terminal-to-terminal voltage *V_{cinv}* at the smoothing capacitor 21 to determine whether the switch closing failure has occurred in each of the high-potential main switch *SMRH* and the precharge switch *SP* between time *t11* and time *t12.* Specifically, when detecting the fact that the terminal-to-terminal voltage *V_{cinv}* at the smoothing capacitor 21 is decreasing, the control device 100 determines that the switch closing failure has not occurred in each of the high-potential main switch *SMRH* and the precharge switch *SP.* Alternatively, when detecting the fact that the terminal-to-terminal voltage *V_{cinv}* at the smoothing capacitor 21 remains undropped, the control device 100 determines that the switch closing failure has occurred in each of the high-potential main switch *SMRH* and the precharge switch *SP.*

During electrical discharge from the smoothing capacitor 21 from time *t11* or before such electrical discharge, the control device 100 may control the switching operation of the inverter 20 to deliver electrical energy from the smoothing capacitor 21 to the capacitor 90 and monitor a rise in the terminal-to-terminal voltage *V_{cb}* at the capacitor 90 during the control of the switching operation of the inverter 20. When detecting the fact that the terminal-to-terminal voltage *V_{cb}* has not risen, the control device 100 may determine that the switch opening failure has occurred in the connecting switch 93.

The control device 100 analyzes the terminal-to-terminal voltage *V_{cb}* at the capacitor 90 to determine whether the switch closing failure has occurred in the connecting switch 93 between time *t11* and time *t12.* Specifically, when detecting the fact the terminal-to-terminal voltage *V_{cb}* at the capacitor 90 has not risen, the control device 100 determines that the switch closing failure has not occurred in the connecting switch 93. Alternatively, when detecting the fact that the terminal-to-terminal voltage *V_{cb}* at the capacitor 90 is rising, the control device 100 determines that the switch closing failure has occurred in the connecting switch 93.

In the serial neutral point mode in this embodiment, the inter-negative terminal bypass switch 50 is configured to be in the off-state. This embodiment is, therefore, designed not to diagnose whether the switch opening failure has occurred in the inter-negative terminal bypass switch 50.

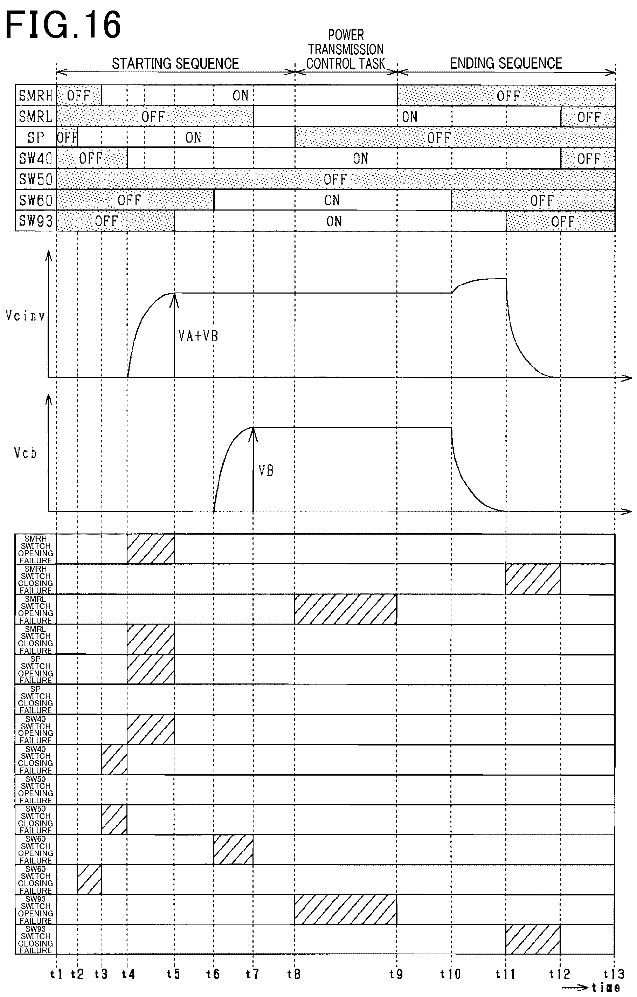

Explanation of Fig. 16 will be given below.

At time *t1,* the main switches *SWRH* and *SWRL,* the precharge switch *SP,* the battery-to-battery switch 40, the inter-negative terminal bypass switch 50, the motor switch 60, and the connecting switch 93 are in the off-state.

At time t2, the control device 100 turns on the precharge switch *SP.* Between time *t2* and time *t3,* the control device 100 analyzes the terminal-to-terminal voltage *V_{cb}* at the capacitor 90, like between time *t2* and time *t3* in Fig. 15, to determine whether the switch closing failure has occurred in the monitor switch 60.

At time *t3,* the control device 100 turns on the high-potential main switch *SMRH.* Between time *t3* and time *t4*, the control device 100 analyzes the terminal-to-terminal voltage *V_{cinv}* at the smoothing capacitor 21, like between time *t3* and time *t4* in Fig. 15, to determine whether the switch closing failure has occurred in each of the battery-to-battery switch 40 and the inter-negative terminal bypass switch 50.

At time *t4*, the control device 100 turns on the battery-to-battery switch 40. When none of the switches is malfunctioning or has a defect, it will cause the terminal-to-terminal voltage *V_{cinv}* at the smoothing capacitor 21 to increase up to the sum of terminal-to-terminal voltages at the first and second storage batteries 31 and 32 (i.e., *VA+VB).* This completes the pre-charge in the smoothing capacitor 21.

The control device 100 analyzes the terminal-to-terminal voltage *V_{cinv}* at the smoothing capacitor 21 to determine whether the switch opening failure has occurred in each of the high-potential main switch *SMRH,* the precharge switch *SP,* and the battery-to-battery switch 40 between time *t4* and time *t5.* Specifically, when detecting the fact that the terminal-to-terminal voltage *V_{cinv}* at the smoothing capacitor 21 is rising, the control device 100 determines that the high-potential main switch *SMRH,* the precharge switch *SP,* and the battery-to-battery switch 40 are not subjected to the switch opening failure. Alternatively, when detecting the fact that the terminal-to-terminal voltage *V_{cinv}* has not risen, the control device 100 determines that the switch opening failure has occurred in at least one of the high-potential main switch *SMRH,* the precharge switch *SP,* and the battery-to-battery switch 40.

The control device 100 analyzes the terminal-to-terminal voltage *V_{cinv}* at the smoothing capacitor 21 to determine whether the switch closing failure has occurred in the low-potential main switch *SMRL* between time *t4* and time *t5.* Specifically, when detecting the fact that a rate of rise in the terminal-to-terminal voltage *V_{cinv}* is identical with that when the low-potential main switch *SMRL* is in the off-state, the control device 100 determines that the switch closing failure has not occurred in the low-potential main switch *SMRL.* Alternatively, when detecting the fact that the rate of rise in the terminal-to-terminal voltage *V_{cinv}* is higher than that when the low-potential main switch *SMRL* is in the off-state, the control device 100 determines that the switch closing failure has occurred in the low-potential main switch *SMRL.*

At time *t5,* the control device 100 turns on the connecting switch 93. At time *t6,* the control device 100 turns on the motor switch 60. When none of the switches is malfunctioning or has a defect, it will cause the terminal-to-terminal voltage *V_{cb}* at the capacitor 90 to rise up to the terminal-to-terminal voltage *VB* at the second storage battery 32.

Between time *t5* and time *t6,* the control device 100 analyzes the terminal-to-terminal voltage *V_{cb}* at the capacitor 90, like between time *t5* and time *t6* in Fig. 15, to determine whether the switch opening failure has occurred in the motor switch 60.

At time *t7,* the control device 100 turns on the low-potential main switch *SMRL.* At time *t8,* the control device 100 turns off the precharge switch *SP.* This completes the starting sequence.

The control device 100 performs the task shown in Fig. 2 between time *t8* and time *t9*. The control device 100 analyzes a parameter measured by at least one of the current sensors installed in the electrical power converter to determine whether electrical current properly flows in the electrical power converter for diagnosing whether the switch opening failure has occurred in each of the low-potential main switch *SMRL* and the connecting switch 93 between time *t8* and time *t9.*

At time *t9*, the control device 100 turns off the high-potential main switch *SMRH* to initiate the ending sequence.

At time *t10,* the control device 100 turns off the motor switch 60. The control device 100 also works to cyclically turn on or off at least one of the lower arm switches *SWL* to transfer electrical charge from the capacitor 90 to the smoothing capacitor 21 to complete electrical discharge from the capacitor 90.

At time *t11,* the control device 100 turns off the connecting switch 93. The control device 100 also works to cyclically turn on or off the upper and lower arm switches *SWH* and *SWL* to discharge electrical charges from the smoothing capacitor 21 to complete electrical discharge from the smoothing capacitor 21. At time *t12,* the control device 100 turns off the low-potential main switch *SMRL* and the battery-to-battery switch 40. Subsequently, at time *t13,* the ending sequence is terminated.

Between time *t11* and *t12,* the control device 100 analyzes the terminal-to-terminal voltage *V_{cinv}* at the smoothing capacitor 21, like between time t11 and time 12 in Fig. 15, to diagnose whether the switch closing failure has occurred in the high-potential main switch *SMRH.* The control device 100 also analyzes the terminal-to-terminal voltage *V_{cb}* at the capacitor 90 to diagnose whether the switch closing failure has occurred in the connecting switch 93.

During electrical discharge from the smoothing capacitor 21 from time *t11* or before such electrical discharge, the control device 100 may control the switching operation of the inverter 20 to deliver electrical energy from the smoothing capacitor 21 to the capacitor 90 and monitor a rise in the terminal-to-terminal voltage *V_{cb}* at the capacitor 90 during the control of the switching operation of the inverter 20. When detecting the fact that the terminal-to-terminal voltage *V_{cb}* at the capacitor 90 has not risen, the control device 100 may determine that the switch opening failure has occurred in the connecting switch 93.

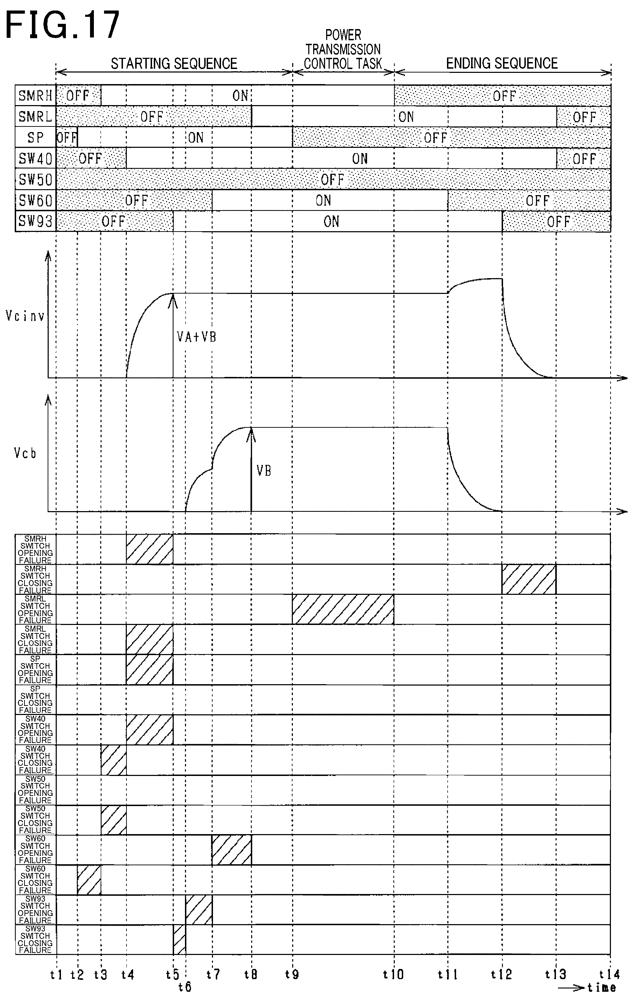

Explanation of Fig. 17 will be given below.

A task performed between time *t1* and time *t5* is the same as that between time *t1* and time *t5* in Fig. 16.

Between time *t5* and *t7,* the control device 100 works to perform the switching operation of the inverter 20 to electrically charge the capacitor 90. The control device 100 terminates the switching operation before the terminal-to-terminal voltage *V_{cb}* at the capacitor 90 reaches the terminal-to-terminal voltage *VB* at the second storage battery 32. When detecting the fact that the terminal-to-terminal voltage *V_{cinv}* at the capacitor 90 has not risen between time *t5* and time *t6,* the control device 100 determines that the switch closing failure has not occurred in the connecting switch 93. Alternatively, when detecting the fact that the terminal-to-terminal voltage *V_{cinv}* at the capacitor 90 is rising, the control device 100 determines that the switch closing failure has occurred in the connecting switch 93.

At time *t7,* the control device 100 turns on the motor switch 60. In other words, the first half of pre-charge of the capacitor 90 is achieved by performing the switching operation of the inverter 20 to deliver electrical charges from the smoothing capacitor 21 to the capacitor 90.

Between time *t7* and time *t8,* the control device 100 analyzes the terminal-to-terminal voltage *V_{cb}* at the capacitor 90, like between time *t6* and time *t7* in Fig. 16, to determine whether the switch opening failure has occurred in the motor switch 60.

At time *t8,* the control device 100 turns on the low-potential main switch *SMRL.* At time *t9*, the control device 100 cyclically turns on or off the precharge switch SP to complete the starting sequence.

The control device 100 performs the task shown in Fig. 2 between time *t9* and time *t10.* Between time *t9* and time *t10,* the control device 100 determines, like between time *t8* and time *t9* in Fig. 16, whether the switch opening failure has occurred in the low-potential main switch *SMRL.*

At time *t10,* the control device 100 turns off the high-potential main switch *SMRH* to initiate the ending sequence.

At time *t11,* the control device 100 turns off the motor switch 60. The control device 100 also works to cyclically turn on or off at least one of the lower arm switches *SWL* to transfer electrical charges from the capacitor 90 to the smoothing capacitor 21 to complete electrical discharge from the capacitor 90.

At time *t12,* the control device 100 turns off the connecting switch 93. The control device 100 also works to control switching operations of the upper and lower arm switches *SWH* and *SWL* to emit electrical charges from the smoothing capacitor 21 to complete the electrical discharge from the smoothing capacitor 21. At time *t13,* the control device 100 turns off the low-potential main switch *SMRL* and the battery-to-battery switch 40. Afterwards, at time t14, the ending sequence is completed.

Between time *t12* and time *t13,* the control device 100 analyzes the terminal-to-terminal voltage *V_{cinv}* at the smoothing capacitor 21, like between time *t11* and time *t12* in Fig. 16, to determine whether the switch closing failure has occurred in the high-potential main switch *SMRH.*

### MODIFICATIONS OF THE THIRD EMBODIMENT

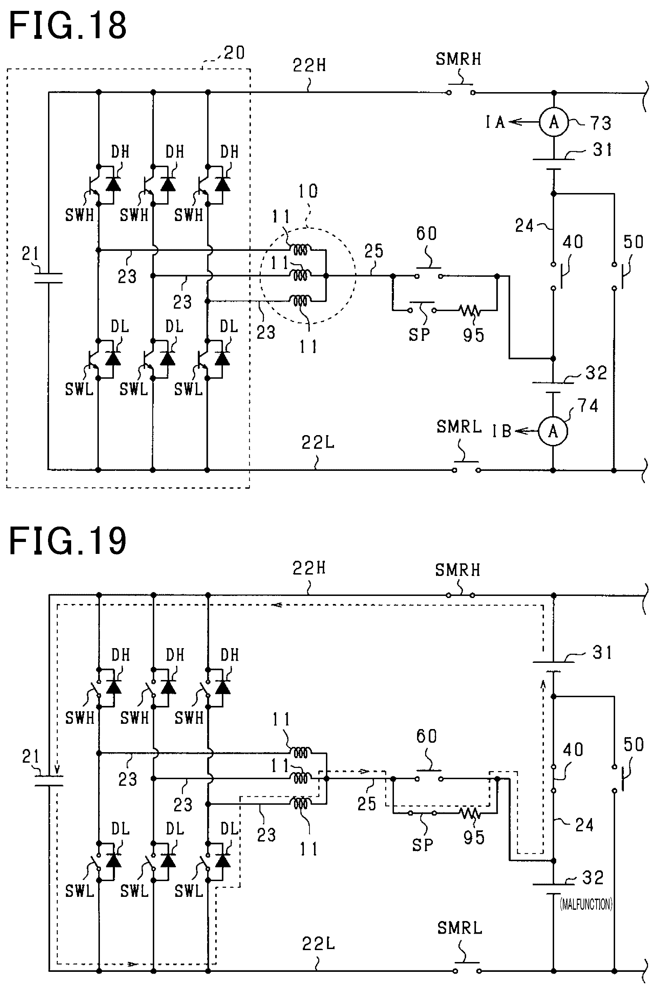

The electrical power converter may, as illustrated in Fig. 18, have a series-connected combination of the precharge switch *SP* and the resistor 95 which is connected in parallel to the motor switch 60.

Upon actuation of the electrical power converter, the control device 100 performs a pre-charge task to electrically charge the smoothing capacitor 21. In this embodiment, even if one of the first storage battery 31 and the second storage battery 32 has failed in operation, so that it is inoperable, the other may be used to pre-charge the smoothing capacitor 21.

The case where a failure has occurred in the second storage battery 32 will be described below with reference to Fig. 19. The control device 100 turns on the high-potential main switch *SMRH,* the precharge switch *SP,* and the battery-to-battery switch 40 and turns off the low-potential main switch *SMRL,* the motor switch 60, and the inter-negative terminal bypass switch 50. The control device 100 also turns off the upper and lower arm switches *SWH* and *SWL* of the inverter 20 for all phases. This electrically charges the smoothing capacitor 21 using the first storage battery 31.

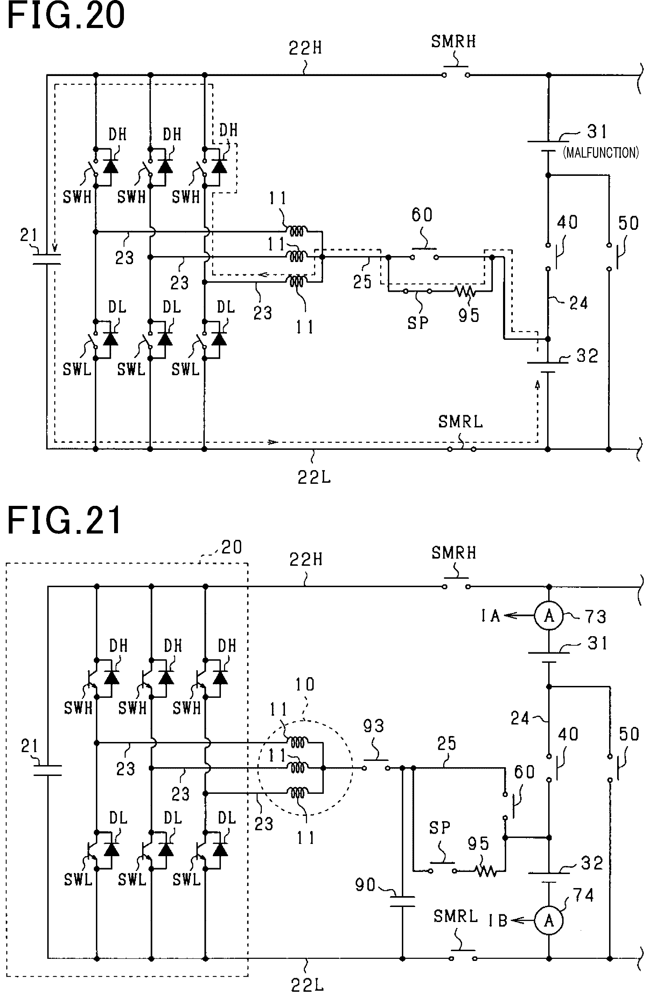

The case where a failure has occurred in the first storage battery 31 will be described below with reference to Fig. 20. The control device 100 turns on the low-potential main switch *SMRL* and the precharge switch *SP* and turns off the high-potential main switch *SMRH,* the motor switch 60, the battery-to-battery switch 40, and the inter-negative terminal bypass switch 50. The control device 100 also turns off the upper and lower arm switches *SWH* and *SWL* of the inverter 20 for all phases. This electrically charges the smoothing capacitor 21 using the second storage battery 32.

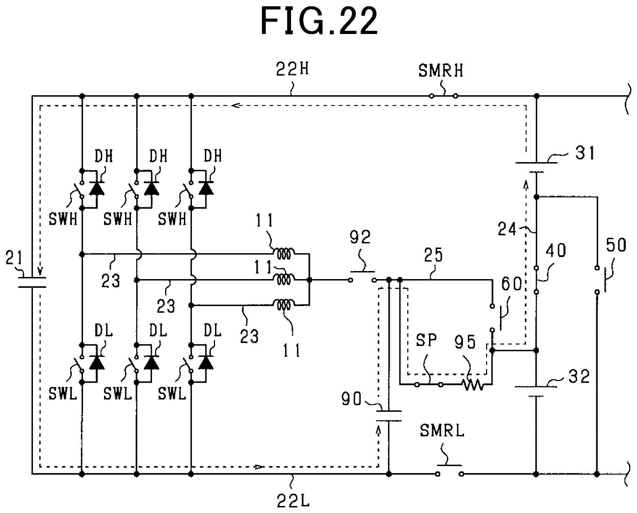

The electrical power converter in Fig. 20 may be modified, as illustrated in Fig. 21, to include the connecting switch 93 and the capacitor 90. The control device 100 is capable of electrically charging the smoothing capacitor 21 and the capacitor 90 at the same time in the pre-charging task performed to electrically charge the smoothing capacitor 21. Specifically, the control device 100, as illustrated in Fig. 22, turns on the high-potential main switch *SMRH,* the precharge switch *SP,* and the battery-to-battery switch 40 and turns off the low-potential main switch *SMRL,* the motor switch 60, and the inter-negative terminal bypass switch 50. The control device 100 also turns off the upper and lower arm switches *SWH* and *SWL* of the inverter 20 for all phases.

### FOURTH EMBODIMENT

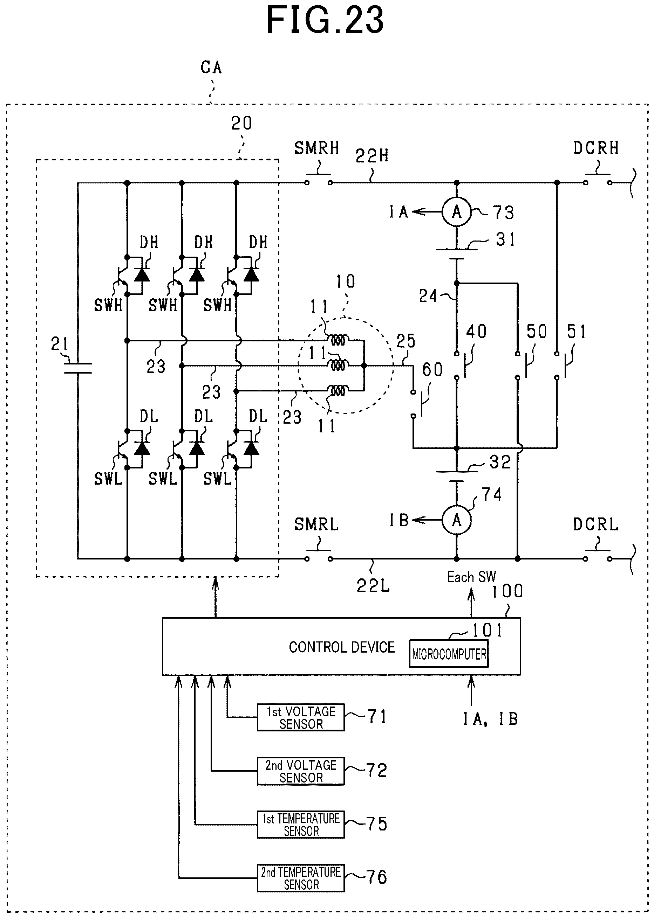

The fourth embodiment will be described below in terms of differences from the first embodiment with reference to the drawings. The electrical power converter in this embodiment, as illustrated in Fig. 23, includes the positive-to-positive terminal bypass switch 51 which connects between the positive terminal of the second storage battery 32 and the high-potential electrical path 22H.

The control device 100 in this embodiment is capable of electrically charging the second storage battery 32 using the low-voltage charger 210 with the positive-to-positive terminal bypass switch 51 being turned on and the inter-negative terminal bypass switch 50, the battery-to-battery switch 40, and the motor switch 60 being turned off.

When it is required to perform the task shown in Fig. 2, the control device 100 turns off the positive-to-positive terminal bypass switch 51.

### FIFTH EMBODIMENT

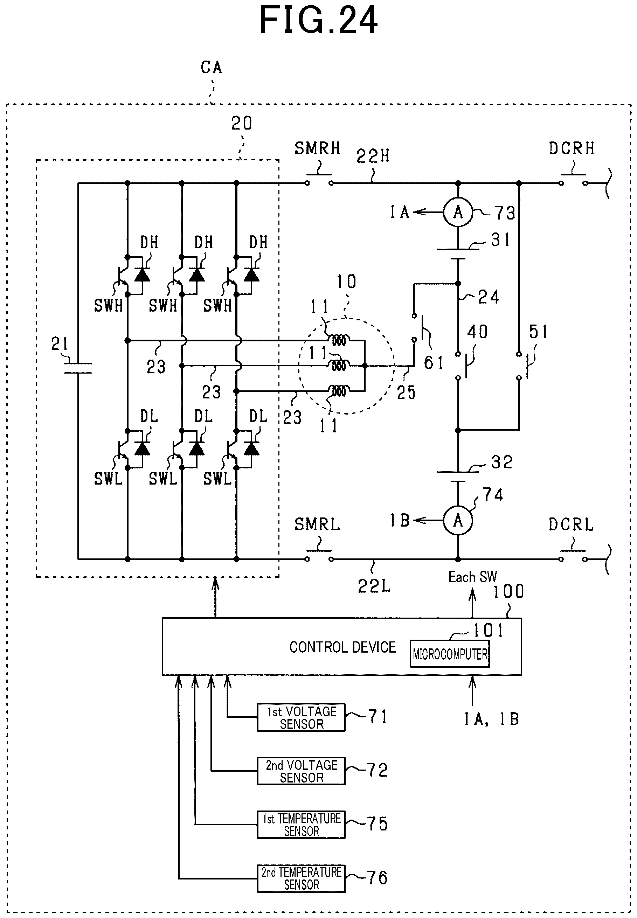

The fifth embodiment will be described below in terms of differences from the first embodiment with reference to the drawings. The electrical power converter in this embodiment, as illustrated in Fig. 24, includes the positive-to-positive terminal bypass switch 51, but does not have the inter-negative terminal bypass switch 50 illustrated in Fig. 1. The motor electrical path 25 connects between the neutral point of the armature windings 11 and a portion of the battery-to-battery electrical path 24 which is located closer to the first battery 31 than the battery-to-battery switch 40 is. The motor electrical path 25 also has the motor switch 61 mounted thereon.

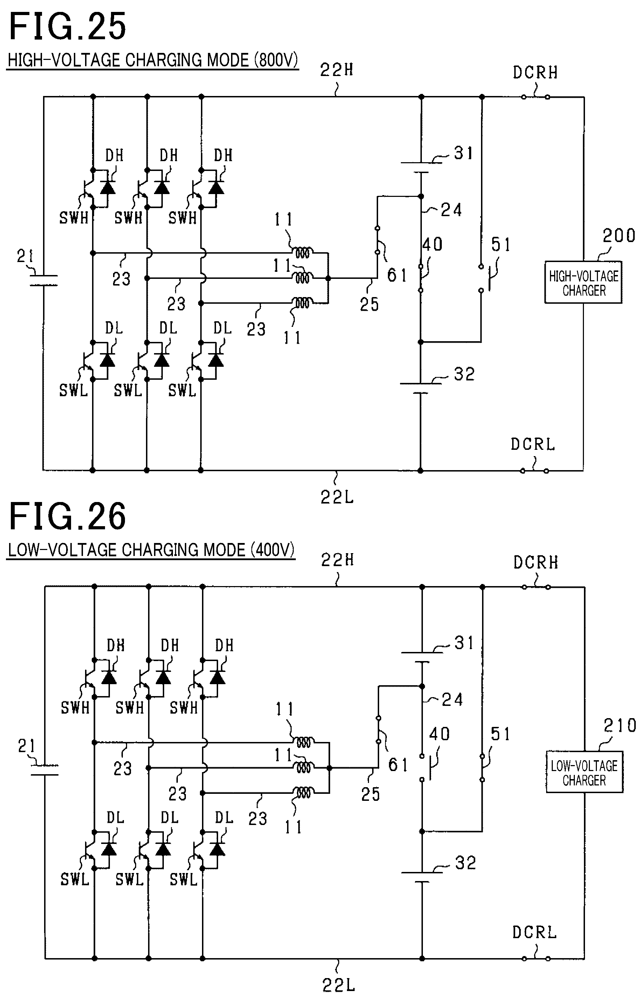

The serial neutral point mode in this embodiment is a mode which turns on the battery-to-battery switch 40 and the motor switch 61 and turns off the positive-to-positive terminal bypass switch 51 (see Fig. 25). The motor-through parallel mode in this embodiment is a mode which turns off the battery-to-battery switch 40 and turns on the positive-to-positive terminal bypass switch 51 and the motor switch 61 (see Fig. 26).

Next, the electrical power transfer control task performed in this embodiment will be described below with reference to Fig. 2. The following discussion refer only to differences from the first embodiment.

In step S12, it is determined whether a value derived by subtracting the second measured voltage *VB* from the first measured voltage VA is lower than or equal to a reference threshold value *ΔVjde.* If a YES answer is obtained meaning that the motor-through parallel mode is enabled to be entered. Alternatively, if a NO answer obtained meaning that the value is higher than the reference threshold value *ΔVjde,* the control device 100 concludes that it is impossible to enter the motor-through parallel mode. When the terminal-to-terminal voltage at the first storage battery 31 is much higher than that at the second storage battery 32, it will create a closed circuit extending from the first storage battery 31, to the high-potential electrical path 22H, to the positive-to-positive terminal bypass switch 51, to the second storage battery 32, to the low-potential electrical path 22L, to the lower arm diodes *DL* connected in inverse-parallel to the lower arm switches *SWL,* to the armature windings 11, and to the motor switch 61 in response to the operation mode for the battery-to-battery switch 40, the positive-to-positive terminal bypass switch 51, and the motor switch 61 being changed to the motor-through parallel mode, thereby resulting in a flow of electrical current from the first storage battery 31 to the second storage battery 32.

When the routine proceeds to the step S19 through steps S17 and S18, the control device 100 enters the low-voltage charging mode to electrically charge the second storage battery 32 using the low-voltage charger 210 with the high-potential main switch *SMRH,* the low-potential main switch *SMRL,* and the charging switches *DCRH* and *DCRL* being turned on. In this mode, electrical current, as demonstrated in Fig. 26, flows in a closed circuit including the low-voltage charger 210, the high-potential electrical path 22H, the positive-to-positive terminal bypass switch 51, the second storage battery 32, and the low-potential electrical path 22L, thereby electrically charging the second storage battery 32 using the low-voltage charger 210.

In the low-voltage charging mode, the degrees of electrical power for charging the first storage battery 31 and the second storage battery 32 may be controlled independently from each other. Such control is achieved by cyclically turning on or off at least one of the lower arm switches *SWL* of the inverter 20 while electrically charging the first storage battery 31 using the low-voltage charger 210. The degree of electrical power used to electrically charge each of the first storage battery 31 and the second storage battery 32 may be controlled by controlling a duty cycle (i.e., *Ton*/*Tsw*) that is a ratio of an on-duration *Ton* of each of the lower arm switches *SWL* to one switching cycle *Tsw.*

The low-voltage charging mode in this embodiment is also capable of controlling the switching operation of the inverter 20 for at least one phase to perform the voltage equalizing task, the capacity equalizing task, and the temperature raising task while electrically charging the second storage battery 32 using the low-voltage charger 210.

In step S27, the control device 100 performs a switching operation which cyclically turns on or off at least one of the lower arm switches *SWL* which belongs a first phase that is a selected one of the three phases without simultaneously turning on the upper and lower arm switches *SWH* and *SWL* of the first phase, thereby continuing transmission of electrical power from the second storage battery 32 to the first storage battery 31 until a difference between the first measured voltage *VA* and the second measured voltage *VB* drops below the voltage threshold value *Vth.* When the difference between the first measured voltage *VA* and the second measured voltage *VB* is determined to have dropped below the voltage threshold value *Vth,* the routine proceeds to step S18 wherein the operation mode is changed to the motor-through parallel mode. The routine proceeds to step S19 wherein the low-voltage charging mode is performed.

The above-described fifth embodiment offers substantially the same beneficial advantages as those in the first embodiment.

### SIXTH EMBODIMENT

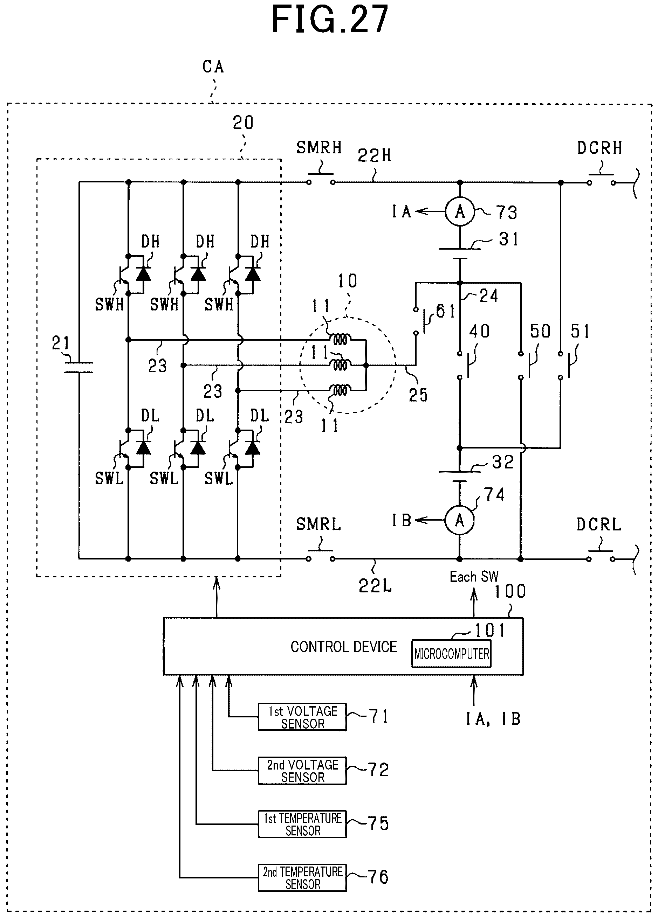

The sixth embodiment will be described below in terms of differences from the fifth embodiment with reference to the drawings. The electrical power converter in this embodiment, as illustrated in Fig. 27, includes the positive-to-positive terminal bypass switch 51 in addition to the inter-negative terminal bypass switch 50.

The control device 100 is capable of electrically charging the first storage battery 31 using the low-voltage charger 210 regardless of the second storage battery 32 with the inter-negative terminal bypass switch 50 turned on, and the positive-to-positive terminal bypass switch 51, the battery-to-battery switch 40, and the motor switch 61 which are turned off.

When it is required to perform the task in Fig. 2, the control device 100 turns off the inter-negative terminal bypass switch 50.

### SEVENTH EMBODIMENT

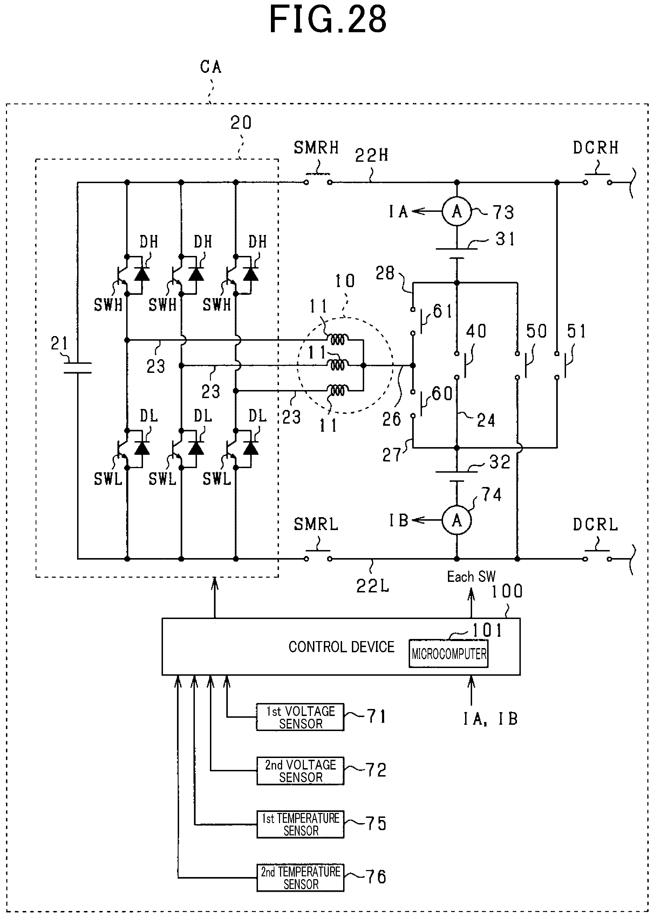

The eighth embodiment will be described below in terms of differences from the above-described embodiments with reference to the drawings. The electrical power converter in this embodiment, as illustrated in Fig. 28, includes a first motor switch connecting between the neutral point of the armature windings 11 and the negative terminal of the first storage battery 31 and a second motor switch connecting between the neutral point of the armature windings 11 and the positive terminal of the second storage battery 32.

The neutral point of the armature windings 11 connects with the first end of the common path 26. The common path 26 has the second end connecting with the first end of the first electrical path 27. The first electrical path 27 has the second end connecting with a portion of the battery-to-battery electrical path 24 which is located closer to the second storage battery 32 than to the battery-to-battery switch 40. The common path 26 has the second end connecting with the first end of the second electrical path 28. The second electrical path 28 has the second end connecting with a portion of the battery-to-battery electrical path 24 which is located closer to the first storage battery 31 than to the battery-to-battery switch 40. The first electrical path 27 has the first motor switch 60 mounted thereon. Similarly, the second electrical path 28 has the second motor switch 61 mounted thereon. The electrical power converter may alternatively be designed not to include the common path 26, but have the first ends of the first electrical path 27 and the second electrical path 28 which are connected to the neutral point of the armature windings 11.

The above structure of the electrical power converter is also capable of performing the same task as that, as shown in Fig. 2, which is performed by the structure illustrated in Fig. 1 or Fig. 24.

### OTHER EMBODIMENTS

Each of the above-described embodiments may be modified in the following way.

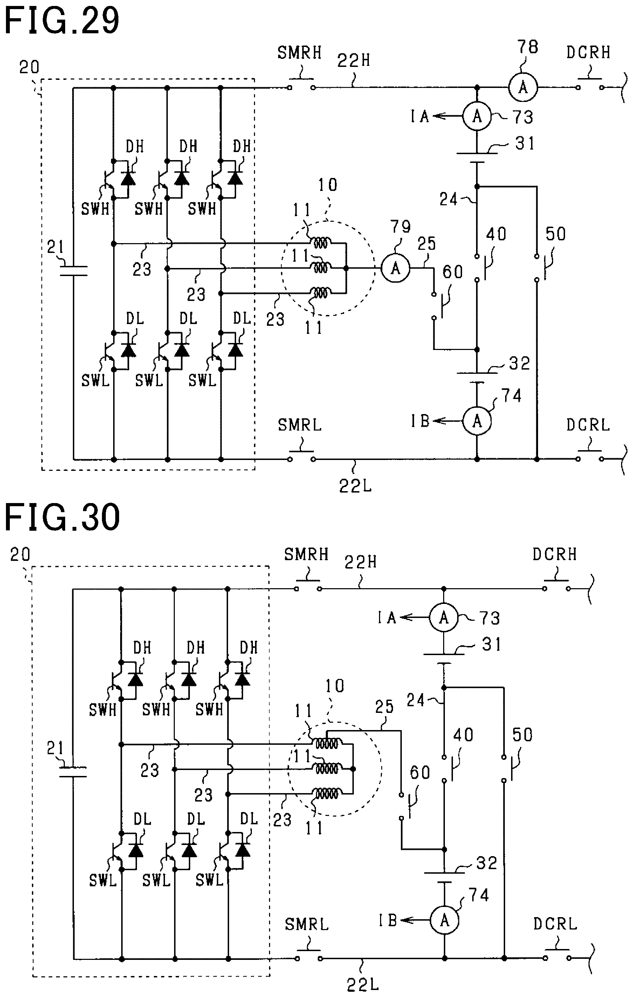

The electrical power converter may, as illustrated in Fig. 29, include the third current sensor 78 which is mounted on a portion of the high-potential electrical path 22H which is located between the high-potential charging switch *DCRH* and a joint of the high-potential electrical path 22H with the first storage battery 31. The electrical power converter may also have the fourth current sensor 79 mounted in a predetermined portion of the motor electrical path 25 which is, for example, located closer to the neutral point of the armature windings 11 than the motor switch 60 is. The electrical power converter may alternatively be designed to include at least two or more of the first to fourth current sensors 73, 74, 78, and 79. This enables electrical charging of the first and second storage batteries 31 and 32 to be controlled using a minimum number of current sensors. The electrical power converter may also have current sensors working to measure electrical current flowing through the conductors 23 and also use a total value of electrical currents flowing in the conductors 23 instead of an output from the fourth current sensor 79.

The motor electrical path 25 is not necessarily connected to the neutral point of the armature windings 11, but may be, as illustrated in Fig. 30, connected to an intermediate portion of one of the armature windings 11.

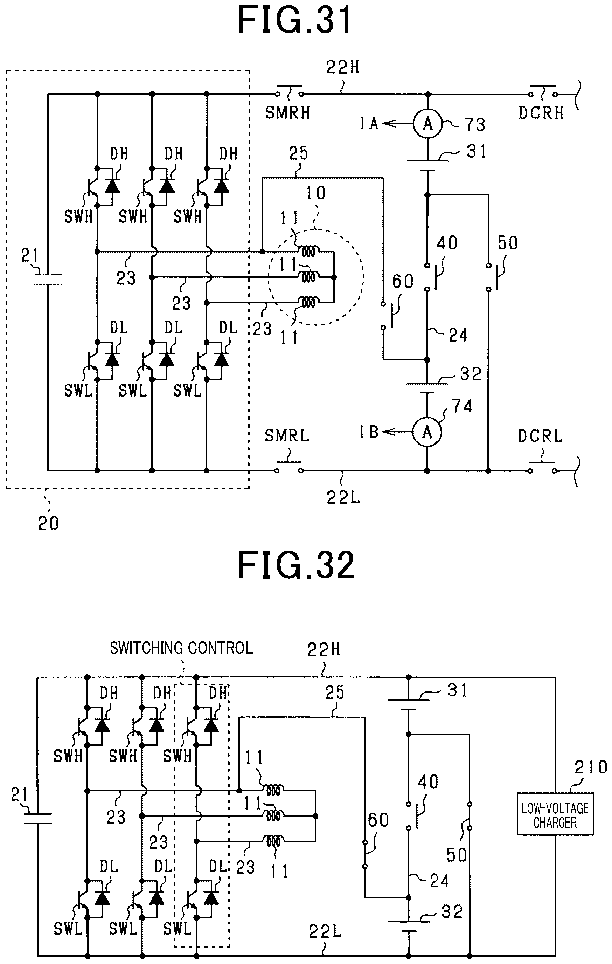

The motor electrical path 25 may alternatively be, as illustrated in Fig. 31, to one of the conductors 23. In this case, the switching operation of the inverter 20 in step S15, S19, or S22 in Fig. 2 is achieved, as clearly illustrated in Fig. 32, by turning off the upper and lower arm switches *SWH* and *SWL* which lead to one of the conductors 23 with which the motor electrical path 25 selectively connects and also alternately turning on the other upper and lower arm switches *SWH* and *SWL* for at least one of the three phases.

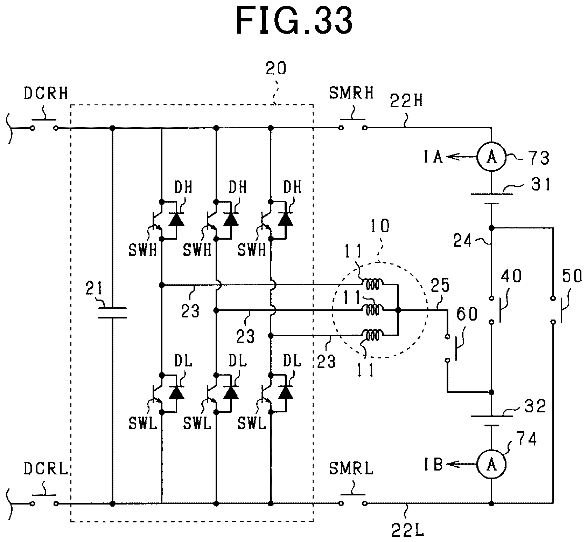

The high-potential electrical path 22H may, as illustrated in Fig. 33, have a portion on which the high-potential charging switch *DCRH* and the positive terminal connector are located on an opposite side of the inverter 20 to the first storage battery 31. The low-potential electrical path 22L may also have a portion on which the low-potential charging switch *DCRL* and the negative terminal connector are arranged on an opposite side of the inverter 20 to the second storage battery 32.

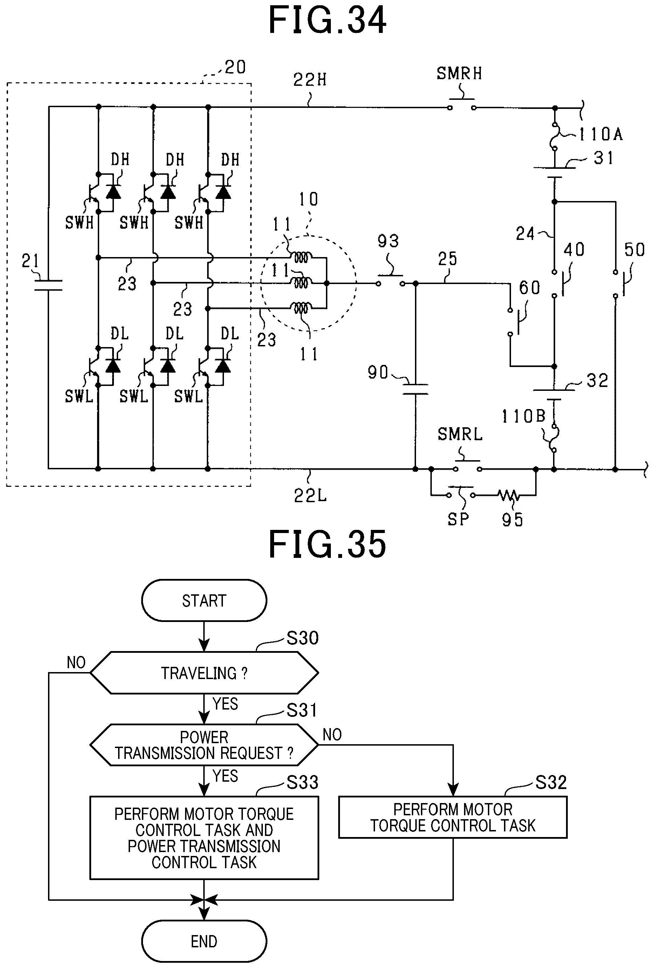

The positive terminal of the first storage battery 31 and the high-potential electrical path 22H may be, as illustrated in Fig. 34, connected together through the first fuse 110A. Similarly, the negative terminal of the second storage battery 32 and the low-potential electrical path 22L may be connected together using the second fuse 110B.

When determining that the power transfer request has been made during movement of the vehicle CA, the control device 100 may work to control the switching operation of the inverter 20 for bringing a controlled parameter (i.e., the degree of output torque) of the motor 10 into agreement with a target value and simultaneously perform the voltage equalizing task and the capacity equalizing task. This task will be described below with reference to Fig. 35 as being performed in the structure illustrated in Fig. 1.

After entering the program in Fig. 35, the routine proceeds to step S30 wherein it is determined whether the vehicle CA is moving.

If a YES answer is obtained meaning that the vehicle CA is moving, then the routine proceeds to step S31 wherein the power transfer request has been made. If the above-described condition (c) is met, it is determined that the power transfer request has been made.

If a NO answer is obtained in step S31, meaning that no power transfer request is made, then the routine proceeds to step S32 wherein the switching operation of the inverter 20 is performed to bring the degree of torque outputted by the motor 10 into agreement with a target value to move the vehicle CA. In this operation, the control device 100 turns off the motor switch 60 and the inter-negative terminal bypass switch 50.

Alternatively, if a YES answer is obtained in step S31 meaning that there is the power transfer request, then the routine proceeds to step S33 wherein the control device 100 performs the switching operation of the inverter 20 to bring the degree of torque outputted by the motor 10 into agreement with a target value to move the vehicle CA and also controls the switching operation of the inverter 20 to perform the above-described capacity equalizing task. In this operation, the control device 100 changes the operation mode to the serial neutral point mode.

The above operation enables the motor 10 to be controlled in operation to move the vehicle CA with a minimized difference between the state of charge *SOCA* of the first storage battery 31 and the state of charge *SOCB* of the second storage battery 32. This, therefore, eliminates a risk that the state of charge of one of the first and second storage batteries 31 and 32 may be kept much higher than an allowable lower limit thereof, but that of the other of the first and second storage batteries 31 and 32 may reach the allowable lower limit, thereby resulting in an increased distance the vehicle CA can travel.

Each of the main switches *SMRH* and *SMRL,* the charging switches *DCRH* and *DCRL,* the battery-to-battery switch 40, the bypass switches 50 and 51, and the motor switch 60, and the connecting switches 91 to 94 does not necessarily need to be designed as a discrete switch, but they may alternatively be configured in the form of a series-connected unit(s) made of a plurality of switches connected in series with each other and/or a parallel-connected unit(s) made of a plurality of switches connected in parallel to each other.

The inverter 20, as already described, includes IGBTs to which freewheel diodes are connected in inverse-parallel, but may alternatively include n-channel MOSFETs equipped with body diodes. In this structure, the n-channel MOSFETs have drains used as high-potential terminals and sources used as low-potential terminals.

The motor electrical path 25 may not include the motor switches 60.

The motor 10 does not necessarily need to be use star-connected windings, but may alternatively be made of delta-connected windings. The motor 10 and the inverter 20 are, as described above, designed to three phases, but may alternatively be configured for two or more than three phases. The motor 10 may be implemented by a synchronous motor equipped with permanent magnets functioning as field poles mounted on a rotor or a wound-field synchronous motor equipped with field windings functioning as magnetic poles on a rotor. Such a structure may have both field windings and permanent magnets mounted on the rotor. The motor 10 may alternatively be designed as an induction motor as well as a synchronous motor.

An electrical accumulator(s) which is electrically charged by the external charger may be implemented by a high-capacitance electrical double-layer capacitor(s) as well as an electrical energy storage(s) or alternatively be designed to have a combination of a storage battery(ies) and an electrical double-layer capacitor(s).

A moving object on which the electrical power converter is not necessarily a vehicle, such as an automobile, but may be an aircraft, a ship, or a boat. The electrical power converter may alternatively be mounted on a stationary place.

The controllers or how to construct them referred to in this disclosure may be realized by a special purpose computer which is equipped with a processor and a memory and programmed to execute one or a plurality of tasks created by computer-executed programs or alternatively established by a special purpose computer equipped with a processor made of one or a plurality of hardware logical circuits. The controllers or operations thereof referred to in this disclosure may alternatively be realized by a combination of an assembly of a processor with a memory which is programmed to perform one or a plurality of tasks and a processor made of one or a plurality of hardware logical circuits. Computer-executed programs may be stored as computer executed instructions in a non-transitory computer readable medium.

This disclosure is not limited to the above embodiments, but may be realized by various embodiments without departing from the purpose of the disclosure. This disclosure includes all possible combinations of the features of the above embodiments or features similar to the parts of the above embodiments. The structures in this disclosure may include only one or some of the features discussed in the above embodiments unless otherwise inconsistent with the aspects of this disclosure.

## Claims

1. An electrical power converter comprising:
a high-potential electrical path (22H) which is electrically connectable with a positive terminal of a first storage battery (31);
a low-potential electrical path (22L) which is electrically connectable with a negative terminal of a second storage battery (32);
an inverter (20) which includes upper arm switches (*SWH*) and lower arm switches (*SWL*), the upper arm switches being electrically connected with the high-potential electrical path, the lower arm switches being electrically connected to the low-potential electrical path;
a motor (10) which includes armature windings (11) electrically connected to joints of the upper arm switches and the lower arm switches through conductors (23);
a battery-to-battery switch (40) which is disposed on a battery-to-battery electrical path (24) electrically connecting with a negative terminal of the first storage battery and a positive terminal of the second storage battery;
a bypass switch (50, 51) which establishes at least one of an electrical connection between the negative terminals of the first storage battery and the second storage battery and an electrical connection between the positive terminals of the first storage battery and the second storage battery;
a motor electrical path (25 to 28) which electrically connects the armature windings or the conductors with the battery-to-battery electrical path; and
a control device (100) which determines whether there is a power transfer request which requests transmission of electrical power between the first storage battery and the second storage battery, wherein
when determining that there is the power transfer request, the control device sets an operation mode for the battery-to-battery switch and the bypass switch to a first mode or a second mode and then controls a switching operation of the inverter to perform an electrical power transfer task to transmit electrical power between the first storage battery and the second storage battery, the first mode being a mode in which the battery-to-battery switch is turned on, and the bypass switch is turned off, the second mode being a mode in which the battery-to-battery switch is turned off, and the bypass switch is turned on.

2. The electrical power converter as set forth in claim 1, wherein when determining that a difference in voltage between the first storage battery and the second storage battery is lower than or equal to a reference threshold value, the control device performs the second mode, while when determining that the difference in voltage between the first storage battery and the second storage battery is higher than the reference threshold value, the control device inhibits the second mode from being entered.

3. The electrical power converter as set forth in 2, wherein the bypass switch is configured as an inter-negative terminal bypass switch (50) which electrically connects between the negative terminal of the first storage battery and the negative terminal of the second storage battery,
the motor electrical path (25) is a path which electrically connects the armature windings to a portion of the battery-to-battery electrical path which is located between the battery-to-battery switch and the second storage battery,
the high-potential electrical path is electrically connectable with a positive terminal of an external charger (200, 210),
the low-potential electrical path is electrically connectable with a negative terminal of the external charger,
the external charger includes one of a high-voltage charger (200) and a low-voltage charger (210) which is lower in charging voltage than the high-voltage charger,
in response to a charging request using the low-voltage charger, the control device determines that there is the power transfer request,
when determining that there is the power transfer request, and the second mode is permitted to be achieved, the control device sets and keeps the operation mode in the second mode and performs the electrical power transfer task while achieving a charging operation using the low-voltage charger.

4. The electrical power converter as set forth in claim 3, wherein the control device keeps the operation mode in the second mode and performs the electrical power transfer task while performing the charging operation using the low-voltage charger, thereby controlling a degree of electrical power for charging the first storage battery and a degree of electrical power for charging the second storage battery independently from each other.

5. The electrical power converter as set forth in claim 2, wherein the bypass switch is implemented by an inter-negative terminal bypass switches (50) which electrically connects between the negative terminal of the first storage battery and the negative terminal of the second storage battery,
the motor electrical path (25) is a path which electrically connects the armature windings with a portion of the battery-to-battery electrical path which is located between the battery-to-battery switch and the second storage battery,
the high-potential electrical path is electrically connectable with a positive terminal of an external charger (200, 210),
the low-potential electrical path is electrically connectable with a negative terminal of the external charger,
the external charger includes one of a high-voltage charger (200) and a low-voltage charger (210) which is lower in charging voltage than the high-voltage charger,
in response to a charging request using the low-voltage charger, the control device determines that there is the power transfer request,
when determining that there is the power transfer request, and the second mode is inhibited from being achieved, the control device sets the operation mode to the second mode.

6. The electrical power converter as set forth in claim 5, wherein the control device sets the operation mode to the first mode and controls a switching operation of at least one of the upper arm switches without simultaneously turning on the upper and lower arm switches of the same phase, thereby achieving transmission of electrical power from the second storage battery to the first storage battery to decrease a difference between voltages at the first and second storage batteries to be lower than the reference threshold value,
when determining that the difference between the voltages at the first and second storage batteries is lower than or equal to the reference threshold value, the control device changes the operation mode to the second mode and performs the electrical power transfer control task while achieving the charging operation using the low-voltage charger.

7. The electrical power converter as set forth in claim 2, wherein the bypass switch is implemented by an inter-positive terminal bypass switches (51) which electrically connects between the positive terminal of the first storage battery and the positive terminal of the second storage battery,
the motor electrical path (25) is a path which electrically connects the armature windings with a portion of the battery-to-battery electrical path which is located between the battery-to-battery switch and the first storage battery,
the high-potential electrical path is electrically connectable with a positive terminal of an external charger (200, 210),
the low-potential electrical path is electrically connectable with a negative terminal of the external charger,
the external charger includes one of a high-voltage charger (200) and a low-voltage charger (210) which is lower in charging voltage than the high-voltage charger,
in response to a charging request using the low-voltage charger, the control device determines that there is the power transfer request,
when determining that there is the power transfer request, and the second mode is permitted to be achieved, the control device sets and keeps the operation mode in the second mode and performs the electrical power transfer task while achieving a charging operation using the low-voltage charger.

8. The electrical power converter as set forth in claim 7, wherein the control device keeps the operation mode in the second mode and performs the electrical power transfer task while performing the charging operation using the low-voltage charger, thereby controlling a degree of electrical power for charging the first storage battery and a degree of electrical power for charging the second storage battery independently from each other.

9. The electrical power converter as set forth in claim 2, wherein the bypass switch is implemented by an inter-positive terminal bypass switches (51) which electrically connects between the positive terminal of the first storage battery and the positive terminal of the second storage battery,
the motor electrical path (25) is a path which electrically connects the armature windings with a portion of the battery-to-battery electrical path which is located between the battery-to-battery switch and the first storage battery,
the high-potential electrical path is electrically connectable with a positive terminal of an external charger (200, 210),
the low-potential electrical path is electrically connectable with a negative terminal of the external charger,
the external charger includes one of a high-voltage charger (200) and a low-voltage charger (210) which is lower in charging voltage than the high-voltage charger,
in response to a charging request using the low-voltage charger, the control device determines that there is the power transfer request,
when determining that there is the power transfer request, and the second mode is inhibited from being achieved, the control device sets the operation mode to the first mode.

10. The electrical power converter as set forth in claim 9, wherein the control device sets the operation mode to the first mode and controls a switching operation of at least one of the lower arm switches without simultaneously turning on the upper and lower arm switches of the same phase, thereby achieving transmission of electrical power from the first storage battery to the second storage battery to decrease a difference between voltages at the first and second storage batteries to be lower than the reference threshold value,
when determining that the difference between the voltages at the first and second storage batteries is lower than or equal to the reference threshold value, the control device changes the operation mode to the second mode and performs the electrical power transfer control task while achieving the charging operation using the low-voltage charger.

11. The electrical power converter as set forth in any one of claims 5, 6, 9, and 10, further comprising charging switches (*DCRH*, *DCRL*) which are disposed on the high-potential electrical path and the low-potential electrical path, when turned on, the charging switches electrically connecting the external charger with the first storage battery and the second storage battery, while when turned off, the charging switches electrically disconnecting the external charger from the first storage battery and the second storage battery, wherein
the control device turns off the charging switches and then sets the operation mode to the first mode.

12. The electrical power converter as set forth in claim 2, wherein the high-potential electrical path is electrically connectable with a positive terminal of an external charger (200, 210),
the low-potential electrical path is electrically connectable with a negative terminal of the external charger,
the external charger includes one of a high-voltage charger (200) and a low-voltage charger (210) which is lower in charging voltage than the high-voltage charger,
in response to a charging request using the high-voltage charger, the control device determines that there is the power transfer request,
when determining that there is the power transfer request, the control device sets the operation mode to the first mode and performs the electrical power transfer task while electrically charging at least one of the first storage battery and the second storage battery using the high-voltage charger.

13. The electrical power converter as set forth in claim 12, wherein the control device sets the operation mode to the first mode and then performs the electrical power transfer task while electrically charging at least one of the first storage battery and the second storage battery using the high-voltage charger, thereby controlling a degree of electrical power for charging the first storage battery and a degree of electrical power for charging the second storage battery independently from each other.

14. The electrical power converter as set forth in claim 1, further comprising a motor switch (60) disposed on the motor electrical path, and wherein
the control device calculates a total number of times the battery-to-battery switch, the bypass switch, and the motor switch are expected to be turned on or off in a period of time from a current cycle of the operation mode to a subsequent cycle of the operation mode through execution of the electrical power transfer control tasks which selects the first mode,
the control device also calculates a total number of times the battery-to-battery switch, the bypass switch, and the motor switch are expected to be turned on or off in a period of time from a current cycle of the operation mode to a subsequent cycle of the operation mode through execution of the electrical power transfer control task which selects the second mode,
when the second mode is permitted to be achieved, the control device selects one of the first mode and the second mode, which is smaller in the total number of times, in execution of the electrical power transfer control task.

15. The electrical power converter as set forth in claim 1, further comprising a motor switch (60) disposed on the motor electrical path, and wherein
the control device calculates a total number of times the battery-to-battery switch, the bypass switch, and the motor switch are expected to be turned on or off in a period of time from a current cycle of the operation mode to execution of the electrical power transfer control task which selects the first mode,
the control device also calculates a total number of times the battery-to-battery switch, the bypass switch, and the motor switch are expected to be turned on or off in a period of time from a current cycle of the operation mode to execution of the electrical power transfer control task which selects the second mode,
when the second mode is permitted to be achieved, the control device selects one of the first mode and the second mode, which is smaller in the total number of times, in execution of the electrical power transfer control task.

16. The electrical power converter as set forth in claim 1, wherein a voltage developed at each of the first storage battery and the second storage battery, a state of charge of each of the first storage battery and the second storage battery, or a correlation value which correlates with a voltage at or a state of charge of each of the first storage battery and the second storage battery is defined as a capacity parameter,
when determining that a difference between the capacitor parameters of the first storage battery and the second storage battery is higher than a threshold value, the control device determines that there is the power transfer request,
when determining that there is the power transfer request, the control device sets the operation mode to one of the first mode and the second mode and then performs the electrical power transfer task to decrease the difference between the capacitor parameters of the first storage battery and the second storage battery.

17. The electrical power converter as set forth in claim 1, wherein when determining that a temperature parameter that is one of a temperature of each of the first storage battery and the second storage battery and a value correlating with the temperature of each of the first and second storage batteries is lower than a temperature threshold value, the control device determines that there is the power transfer request,
when determining that there is the power transfer request, the control device sets the operation mode to one of the first mode and the second mode and then performs the electrical power transfer control task to create a flow of discharge current between the first storage battery and the second storage battery through the armature windings and the inverter.

18. The electrical power converter as set forth in claim 1, wherein the electrical power converter is mounted in a moving object (CA),
the motor works as a power source for moving the moving object,
when determining that there is the power transfer request during movement of the moving object, the control device performs a switching operation of the inverter and also performs the electrical power transfer control task.

19. A program for use in an electrical power converter which comprises a high-potential electrical path (22H) electrically connectable with a positive terminal of a first storage battery (31), a low-potential electrical path (22L) electrically connectable with a negative terminal of a second storage battery (32), an inverter (20) including upper arm switches (*SWH*) electrically connecting with the high-potential electrical path and lower arm switches (*SWL*) electrically connecting with the low-potential electrical path, a motor (10) equipped with armature windings (11) electrically connecting with joints of the upper arm switches to the lower arm switches through conductors (23), and a computer (101),
the electrical power converter also comprises a battery-to-battery switch (40), a bypass switch (50, 51), and a motor electrical path (25 to 28), the battery-to-battery switch being disposed in a battery-to-battery electrical path (24) electrically connecting between a negative terminal of the first storage battery and a positive terminal of the second storage battery, the bypass switch establishing at least one of an electrical connection between the negative terminals of the first storage battery and the second storage battery and an electrical connection between the positive terminals of the first storage battery and the second storage battery, the motor electrical path electrically connecting the armature windings or the conductors with the battery-to-battery electrical path,
the program instructs the computer to perform:
a first task which determines whether a power transfer request which requests transmission of electrical power between the first storage battery and the second storage battery is made; and
a second task which, when the power transfer request is determined to be made, sets an operation mode for the battery-to-battery switch and the bypass switch to one of a first mode and a second mode and performs a switching operation of the inverter to achieve an electrical power transfer control task which controls transmission of electrical power between the first storage battery and the second storage battery, the first mode being a mode in which the battery-to-battery switch is turned on, while the bypass switch is turned off, the second mode being a mode in which the battery-to-battery switch is turned off, while the bypass switch is turned on.
